# EUROPEAN PATENT APPLICATION

(11) **EP 4 123 337 A1**
(43) Date of publication of application: **25.01.2023**
(21) Application number: 20926907.5
(22) Date of filing: 26.03.2020
(51) Int. Cl.: G01S 13/86

(54) **TARGET DETECTION METHOD AND APPARATUS**

(71) Applicant: Huawei Technologies Co., Ltd., Shenzhen, Guangdong 518129 (CN)
(72) Inventor: LIN, Yongbing, Shenzhen, Guangdong 518129 (CN); MA, Sha, Shenzhen, Guangdong 518129 (CN); ZHANG, Hui, Shenzhen, Guangdong 518129 (CN)
(74) Representative: Epping - Hermann - Fischer
(86) International application number: PCT/CN2020/081506
(87) International publication number: WO 2021/189385

(57) **Abstract**

This application provides a target detection method and apparatus, and relates to the field of automatic driving, to improve accuracy of determining that targets detected by different sensors are a same target. The method includes: determining an overlapping region between a first target region and a second target region, where the first target region is determined based on a detection error of a first sensor and a location of a first target detected by the first sensor, the second target region is determined based on a detection error of a second sensor and a location of a second target detected by the second sensor; calculating an overlapping degree of the overlapping region in a union set of the first target region and the second target region; and when the overlapping degree is greater than or equal to a first threshold, determining, based on a relationship between a first region and each of the location of the first target and the location of the second target and/or based on a relationship between a second threshold and a distance between the location of the first target and the location of the second target, a confidence level that the first target and the second target are a same target is a target confidence level.

## Description

### TECHNICAL FIELD

Embodiments of this application relate to the field of automatic driving, and in particular, to a target detection method and apparatus.

### BACKGROUND

Implementation of automatic driving environment sensing depends on sensors deployed on a vehicle. The sensors deployed on the vehicle may include a camera, a millimeter-wave radar, and the like. A plurality of sensors collaborate with each other and complement each other, to enhance a capability and reliability of the automatic driving environment sensing.

The camera has features such as passive measurement, noncontact measurement, high resolution, easy use, and low costs, and is a necessary sensor for automatic driving environment sensing, target detection, and an automatic driving assistance system (advanced driver assistance system, ADAS). Compared with the camera, the millimeter-wave radar uses an active measurement method, has features such as high ranging precision, all-weather working, and a moderate price, and is more widely applied to an automatic driving occasion.

There is an overlapping area between a detection range of the camera and a detection range of the millimeter-wave radar, so that a same target can be simultaneously detected. Target fusion is performed on a target detected by the camera and a target detected by the millimeter-wave radar, so that target detection precision and reliability can be improved. However, due to detection errors of sensors, how to effectively fuse a same target detected by different sensors is a basic problem for implementing functions such as target tracking and vehicle obstacle avoidance.

This involves how to determine whether the target detected by the camera and the target detected by the millimeter-wave radar are a same target.

### SUMMARY

Embodiments of this application provide a target detection method and apparatus, to improve accuracy of determining that targets detected by different sensors are a same target.

To achieve the foregoing objective, embodiments of this application provide the following technical solutions.

According to a first aspect, an embodiment of this application provides a target detection method, including: A first device determines an overlapping region between a first target region and a second target region. The first target region is determined based on a detection error of a first sensor and a location of a first target detected by the first sensor, the second target region is determined based on a detection error of a second sensor and a location of a second target detected by the second sensor, the first target region includes the location of the first target, and the second target region includes the location of the second target. The first device calculates an overlapping degree of the overlapping region in a union set of the first target region and the second target region. When the overlapping degree is greater than or equal to a first threshold, the first device determines, based on a relationship between a first region and each of the location of the first target and the location of the second target and/or based on a relationship between a second threshold and a distance between the location of the first target and the location of the second target, that a confidence level that the first target and the second target are a same target is a target confidence level. The first region is determined based on a first detection error of the first sensor and a third detection error of the second sensor; the detection error of the first sensor includes the first detection error and a second detection error, and precision of the first detection error is higher than precision of the second detection error; and the detection error of the second sensor includes the third detection error and a fourth detection error, and precision of the third detection error is higher than precision of the fourth detection error.

This embodiment of this application provides the target detection method. In the method, the first device determines the overlapping degree of the overlapping region between the first target region and the second target region, and when the overlapping degree is greater than or equal to the first threshold, the first device determines, based on the relationship between the first region and each of the location of the first target and the location of the second target and/or based on the relationship between the second threshold and the distance between the location of the first target and the location of the second target, that the confidence level that the first target and the second target are the same target is the target confidence level. In this way, when the overlapping degree is greater than or equal to the first threshold, accuracy of determining that the confidence level that the first target and the second target are the same target is the target confidence level is further determined based on the relationship between the first region and each of the location of the first target and the location of the second target and/or based on the relationship between the second threshold and the distance between the location of the first target and the location of the second target, thereby reducing incorrect determining.

In a possible implementation, the relationship between the first region and each of the location of the first target and the location of the second target includes: both the location of the first target and the location of the second target are in the first region. Alternatively, the relationship between the first region and each of the location of the first target and the location of the second target includes: at least one of the location of the first target and the location of the second target is outside the first region.

In a possible implementation, when the overlapping degree is greater than or equal to the first threshold, and when both the location of the first target and the location of the second target are in the first region, the target confidence level is a first confidence level. When the overlapping degree is greater than or equal to the first threshold, and when one or more of the location of the first target and the location of the second target are outside the first region, the target confidence level is a second confidence level. The first confidence level is greater than the second confidence level. In other words, a confidence level that the first target and the second target in the first region are a same target is greater than a confidence level that the first target and the second target outside the first region are a same target when the overlapping degree is greater than or equal to the first threshold.

In a possible implementation, the relationship between the second threshold and the distance between the location of the first target and the location of the second target includes: the distance between the location of the first target and the location of the second target is less than or equal to the second threshold. Alternatively, the relationship between the second threshold and the distance between the location of the first target and the location of the second target includes: the distance between the location of the first target and the location of the second target is greater than the second threshold.

In a possible implementation, when the overlapping degree is greater than or equal to the first threshold, and when the distance between the location of the first target and the location of the second target is less than or equal to the second threshold, the target confidence level is a third confidence level. When the overlapping degree is greater than or equal to the first threshold, and when the distance between the location of the first target and the location of the second target is greater than the second threshold, the target confidence level is a fourth confidence level. The third confidence level is greater than the fourth confidence level. That is, when the overlapping degree is greater than or equal to the first threshold, a confidence level that two targets that are relatively close to each other (for example, the distance between the location of the first target and the location of the second target is less than or equal to the second threshold) and that are a same target is greater than a confidence level that two targets that are relatively far away from each other (for example, the distance between the location of the first target and the location of the second target is greater than the second threshold) and that are a same target.

In a possible implementation, that the first device determines, based on the relationship between the first region and each of the location of the first target and the location of the second target and/or based on the relationship between the second threshold and the distance between the location of the first target and the location of the second target, that the confidence level that the first target and the second target are the same target is the target confidence level includes: When both the location of the first target and the location of the second target are in the first region and/or the distance between the first target and the second target is less than or equal to the second threshold, the first device determines that the confidence level is the target confidence level. The target confidence level is greater than or equal to a first confidence level threshold. This further improves accuracy of determining the confidence level that the first target and the second target are a same target.

In a possible implementation, that the first device determines, based on the relationship between the first region and each of the location of the first target and the location of the second target, that the confidence level that the first target and the second target are the same target is the target confidence level includes: When both the location of the first target and the location of the second target are in the first region, the first device determines that the confidence level is the target confidence level. The target confidence level is greater than or equal to the first confidence level threshold. In a possible implementation, that the first device determines, based on the relationship between the first region and each of the location of the first target and the location of the second target, that the confidence level that the first target and the second target are the same target is the target confidence level includes: When at least one of the location of the first target and the location of the second target is outside the first region, the first device determines that the confidence level that the first target and the second target are the same target is the target confidence level and the target confidence level is less than or equal to a second confidence level threshold.

In a possible implementation, that the first device determines, based on the relationship between the second threshold and the distance between the location of the first target and the location of the second target, that the confidence level that the first target and the second target are the same target is the target confidence level includes: When the distance between the location of the first target and the location of the second target is less than or equal to the second threshold, the first device determines that the confidence level is the target confidence level. The target confidence level is greater than or equal to the first confidence level threshold.

In a possible implementation, that the first device determines, based on the relationship between the second threshold and the distance between the location of the first target and the location of the second target, that the confidence level that the first target and the second target are the same target is the target confidence level includes: When the distance between the location of the first target and the location of the second target is greater than or equal to the second threshold, the first device determines that the confidence level is the target confidence level and the target confidence level is less than or equal to the second confidence level threshold. Therefore, when the overlapping degree is greater than or equal to the first threshold, the first device determines a possibility that two targets that are relatively far away from each other are not a same target.

In a possible implementation, when the overlapping degree is greater than or equal to the first threshold, that the first device determines, based on the relationship between the first region and each of the location of the first target and the location of the second target and the relationship between the second threshold and the distance between the location of the first target and the location of the second target, that the confidence level that the first target and the second target are the same target includes: When the overlapping degree is greater than or equal to the first threshold, and both the location of the first target and the location of the second target are in the first region and the distance between the location of the first target and the location of the second target is less than or equal to the second threshold, the first device determines that the confidence level that the first target and the second target are the same target is the target confidence level and the target confidence level is greater than or equal to the first confidence level threshold. Therefore, when the overlapping degree is greater than or equal to the first threshold, the determining metric that both the location of the first target and the location of the second target are in the first region and the distance between the location of the first target and the location of the second target is less than or equal to the second threshold is introduced, a possibility that the first target and the second target are a same target may be further improved.

In a possible implementation, when the overlapping degree is greater than or equal to the first threshold, and both the location of the first target and the location of the second target are in the first region and the distance between the location of the first target and the location of the second target is less than or equal to the second threshold, the target confidence level is a fifth confidence level; and when the overlapping degree is greater than or equal to the first threshold, and at least one of the location of the first target and the location of the second target is outside the first region and/or the distance between the location of the first target and the location of the second target is greater than the second threshold, the target confidence level is a sixth confidence level. The fifth confidence level is greater than the sixth confidence level.

In this embodiment of this application, when the target confidence level is greater than or equal to the first confidence level threshold, it may be considered that the first target and the second target are a same target. In this embodiment of this application, when the target confidence level is less than or equal to the second confidence level threshold, it may be considered that the first target and the second target are not a same target.

In a possible implementation, the first threshold is determined based on the second detection error, or the first threshold is determined based on the fourth detection error.

In a possible implementation, the first threshold increases as the second detection error increases, or the first threshold increases as the fourth detection error increases.

In a possible implementation, when the second detection error is a first error, the first threshold is a first value, or when the second detection error is a second error, the first threshold is a second value, where the first error is greater than the second error, and the first value is greater than the second value. Alternatively, when the fourth detection error is a third error, the first threshold is a third value, or when the fourth detection error is a fourth error, the first threshold is a fourth value, where the third error is greater than the fourth error, and the third value is greater than the fourth value.

In a possible implementation, the second threshold is determined based on the second detection error and the fourth detection error.

In a possible implementation, the second threshold decreases as the second detection error and the fourth detection error increase.

In a possible implementation, the second detection error is a fifth error, the fourth detection error is a sixth error, the second threshold is a fifth value; or the second detection error is a seventh error, the fourth detection error is an eighth error, and the second threshold is a sixth value, where the fifth value is less than the sixth value, the fifth error is greater than the seventh error, and the sixth error is greater than the eighth error.

In a possible implementation, the overlapping degree is a proportion of the overlapping region between the first target region and the second target region in the union set of the first target region and the second target region.

In a possible implementation, that the first device calculates an overlapping degree of the overlapping region in a union set of the first target region and the second target region may be replaced with the following description: The first device calculates an area of the overlapping region. Therefore, the overlapping degree may be replaced with the area of the overlapping region.

In a possible implementation, the first sensor is a radar, and the second sensor is a camera. For example, both the first sensor and the second sensor are vehicle-mounted sensors. For example, the first sensor is a vehicle-mounted radar, and the second sensor is a vehicle-mounted camera.

In a possible implementation, the first detection error is a distance-measuring error of the first sensor in a vertical direction, and the second detection error is an angle-measuring error of the first sensor or a distance-measuring error of the first sensor in a horizontal direction. The third detection error is an angle-measuring error of the second sensor, and the fourth detection error is a distance-measuring error of the second sensor.

In a possible implementation, the location of the first target is a location of the first target relative to a reference point on an XY plane. An X-axis direction of the XY plane is a vehicle widthwise direction, and a Y-axis direction of the XY plane is a vehicle lengthwise direction; and the location of the second target is a location of the second target relative to the reference point on the XY plane.

In a possible implementation, the first device may be a vehicle, a server, or a component (for example, an internal circuit system of a vehicle) that is in the vehicle and that can implement a processing function or a communication function of the vehicle, for example, a vehicle-mounted telematics box (telematics box, T-BOX). Alternatively, the first device may be a chip in the T-Box.

According to a second aspect, an embodiment of this application provides a target detection apparatus. The target detection apparatus may implement the method according to any one of the first aspect or the possible implementations of the first aspect, and therefore can further implement beneficial effects in any one of the first aspect or the possible implementations of the first aspect. The target detection apparatus may be a first device, or may be an apparatus that can support a first device in implementing the method in any one of the first aspect or the possible implementations of the first aspect, for example, a chip or a circuit component applied to the first device. The apparatus may implement the foregoing method by using software or hardware, or by executing corresponding software by hardware.

In an example, a target detection apparatus includes: a first determining module, configured to determine an overlapping region between a first target region and a second target region, where the first target region is determined based on a detection error of a first sensor and a location of a first target detected by the first sensor, the second target region is determined based on a detection error of a second sensor and a location of a second target detected by the second sensor, the first target region includes the location of the first target, and the second target region includes the location of the second target; a calculation module, configured to calculate an overlapping degree of the overlapping region in a union set of the first target region and the second target region; and a second determining module, configured to: when the overlapping degree is greater than or equal to a first threshold, determine, based on a relationship between a first region and each of the location of the first target and the location of the second target and/or based on a relationship between a second threshold and a distance between the location of the first target and the location of the second target, that a confidence level that the first target and the second target are a same target is a target confidence level. The first region is determined based on a first detection error of the first sensor and a third detection error of the second sensor; the detection error of the first sensor includes the first detection error and a second detection error, and precision of the first detection error is higher than precision of the second detection error; and the detection error of the second sensor includes the third detection error and a fourth detection error, and precision of the third detection error is higher than precision of the fourth detection error.

In a possible implementation, the relationship between the first region and each of the location of the first target and the location of the second target includes: both the location of the first target and the location of the second target are in the first region. Alternatively, the relationship between the first region and each of the location of the first target and the location of the second target includes: at least one of the location of the first target and the location of the second target is outside the first region.

In a possible implementation, when the overlapping degree is greater than or equal to the first threshold, and when both the location of the first target and the location of the second target are in the first region, the target confidence level is a first confidence level. When the overlapping degree is greater than or equal to the first threshold, and when one or more of the location of the first target and the location of the second target are outside the first region, the target confidence level is a second confidence level. The first confidence level is greater than the second confidence level. In other words, the confidence level that the first target and the second target in the first region are a same target when the overlapping degree is greater than or equal to the first threshold is greater than the confidence level that the first target and the second target outside the first region are a same target when the overlapping degree is greater than or equal to the first threshold.

In a possible implementation, the relationship between the second threshold and the distance between the location of the first target and the location of the second target includes: the distance between the location of the first target and the location of the second target is less than or equal to the second threshold. Alternatively, the relationship between the second threshold and the distance between the location of the first target and the location of the second target includes: the distance between the location of the first target and the location of the second target is greater than the second threshold.

In a possible implementation, when the overlapping degree is greater than or equal to the first threshold, and when the distance between the location of the first target and the location of the second target is less than or equal to the second threshold, the target confidence level is a third confidence level. When the overlapping degree is greater than or equal to the first threshold, and when the distance between the location of the first target and the location of the second target is greater than the second threshold, the target confidence level is a fourth confidence level. The third confidence level is greater than the fourth confidence level. That is, when the overlapping degree is greater than or equal to the first threshold, a confidence level that two targets that are relatively close to each other (for example, the distance between the location of the first target and the location of the second target is less than or equal to the second threshold) and that are a same target is greater than a confidence level that two targets that are relatively far away from each other (for example, the distance between the location of the first target and the location of the second target is greater than the second threshold) and that are a same target.

In a possible implementation, when both the location of the first target and the location of the second target are in the first region and/or the distance between the location of the first target and the location of the second target is less than or equal to the second threshold, the second determining module is configured to determine that the confidence level is the target confidence level. The target confidence level is greater than or equal to a first confidence level threshold. This further improves accuracy of determining the confidence level that the first target and the second target are a same target.

In a possible implementation, that the second determining module is configured to determine, based on the relationship between the first region and each of the location of the first target and the location of the second target, that the confidence level that the first target and the second target are the same target is the target confidence level includes: When both the location of the first target and the location of the second target are in the first region, the second determining module is configured to determine that the confidence level is the target confidence level. The target confidence level is greater than or equal to the first confidence level threshold.

In a possible implementation, that the second determining module is configured to determine, based on the relationship between the first region and each of the location of the first target and the location of the second target, that the confidence level that the first target and the second target are the same target is the target confidence level includes: When at least one of the location of the first target and the location of the second target is outside the first region, the second determining module is configured to determine the confidence level that the first target and the second target are the same target is the target confidence level. The target confidence level is less than or equal to the second confidence level threshold.

In a possible implementation, that the second determining module is configured to determine, based on the relationship between the second threshold and the distance between the location of the first target and the location of the second target, that the confidence level that the first target and the second target are the same target is the target confidence level includes: When the distance between the location of the first target and the location of the second target is less than or equal to the second threshold, the second determining module is configured to determine that the confidence level is the target confidence level. The target confidence level is greater than or equal to the first confidence level threshold.

In a possible implementation, that the second determining module is configured to determine, based on the relationship between the second threshold and the distance between the location of the first target and the location of the second target, that the confidence level that the first target and the second target are the same target is the target confidence level includes: When the distance between the location of the first target and the location of the second target is greater than or equal to the second threshold, the second determining module is configured to determine that the confidence level is the target confidence level. The target confidence level is less than or equal to a second confidence level threshold. Therefore, when the overlapping degree is greater than or equal to the first threshold, the first device determines that two targets that are relatively far away from each other are not a same target.

In a possible implementation, when the overlapping degree is greater than or equal to the first threshold, that the second determining module is configured to determine, based on the relationship between the first region and each of the location of the first target and the location of the second target and the relationship between the second threshold and the distance between the location of the first target and the location of the second target, that the confidence level that the first target and the second target are the same target includes: When the overlapping degree is greater than or equal to the first threshold, and both the location of the first target and the location of the second target are in the first region and the distance between the location of the first target and the location of the second target is less than or equal to the second threshold, the second determining module is configured to determine that the confidence level that the first target and the second target are the same target is the target confidence level and the target confidence level is greater than or equal to the first confidence level threshold.

In a possible implementation, when the overlapping degree is greater than or equal to the first threshold, and both the location of the first target and the location of the second target are in the first region and the distance between the location of the first target and the location of the second target is less than or equal to the second threshold, the target confidence level is a fifth confidence level; and when the overlapping degree is greater than or equal to the first threshold, and at least one of the location of the first target and the location of the second target is outside the first region and/or the distance between the location of the first target and the location of the second target is greater than the second threshold, the target confidence level is a sixth confidence level. The fifth confidence level is greater than the sixth confidence level.

In this embodiment of this application, when the target confidence level is greater than or equal to the first confidence level threshold, it may be considered that the first target and the second target are a same target. In this embodiment of this application, when the target confidence level is less than or equal to the second confidence level threshold, it may be considered that the first target and the second target are not a same target.

In a possible implementation, the first threshold is determined based on the second detection error, or the first threshold is determined based on the fourth detection error.

In a possible implementation, the first threshold increases as the second detection error increases, or the first threshold increases as the fourth detection error increases.

In a possible implementation, when the second detection error is a first error, the first threshold is a first value, or when the second detection error is a second error, the first threshold is a second value, where the first error is greater than the second error, and the first value is greater than the second value. Alternatively, when the fourth detection error is a third error, the first threshold is a third value, or when the fourth detection error is a fourth error, the first threshold is a fourth value, where the third error is greater than the fourth error, and the third value is greater than the fourth value.

In a possible implementation, the second threshold is determined based on the second detection error and the fourth detection error.

In a possible implementation, the second threshold decreases as the second detection error and the fourth detection error increase.

In a possible implementation, the second detection error is a fifth error, the fourth detection error is a sixth error, the second threshold is a fifth value; or the second detection error is a seventh error, the fourth detection error is an eighth error, and the second threshold is a sixth value, where the fifth value is less than the sixth value, the fifth error is greater than the seventh error, and the sixth error is greater than the eighth error.

In a possible implementation, the overlapping degree is a proportion of the overlapping region between the first target region and the second target region in the union set of the first target region and the second target region.

In a possible implementation, the first sensor is a radar, and the second sensor is a camera. For example, both the first sensor and the second sensor are vehicle-mounted sensors. For example, the first sensor is a vehicle-mounted radar, and the second sensor is a vehicle-mounted camera.

In a possible implementation, the first detection error is a distance-measuring error of the first sensor in a vertical direction, and the second detection error is an angle-measuring error of the first sensor or a distance-measuring error of the first sensor in a horizontal direction. The third detection error is an angle-measuring error of the second sensor, and the fourth detection error is a distance-measuring error of the second sensor.

In a possible implementation, the location of the first target is a location of the first target relative to a reference point on an XY plane. An X-axis direction of the XY plane is a vehicle widthwise direction, and a Y-axis direction of the XY plane is a vehicle lengthwise direction; and the location of the second target is a location of the second target relative to the reference point on the XY plane.

In another example, an embodiment of this application provides a target detection apparatus. The target detection apparatus may be a first device, or may be a chip in the first device. The target detection apparatus may include a processing unit. When the target detection apparatus is the first device, the processing unit may be a processor. The processing unit may replace the first determining module, the second determining module, and the calculation module. In addition, the target detection apparatus may further include a communications unit, and the communications unit may be an interface circuit. The target detection apparatus may further include a storage unit. The storage unit may be a memory. The storage unit is configured to store computer program code. The computer program code includes instructions. The processing unit executes instructions stored in the storage unit, to enable the target detection apparatus to implement the method described in any one of the first aspect or the possible implementations of the first aspect. When the target detection apparatus is the chip in the first device, the processing unit may be a processor, and the communications unit may be collectively referred to as a communications interface. For example, the communications interface may be an input/output interface, a pin, or a circuit. The processing unit executes the computer program code stored in the storage unit, so that the first device implements the method described in any one of the first aspect or the possible implementations of the first aspect. The storage unit may be a storage unit (for example, a register or a cache) in the chip, or may be a storage unit (for example, a read-only memory or a random access memory) that is in the first device and that is outside the chip.

Optionally, the processor, the communications interface, and the memory are coupled to each other.

According to a third aspect, an embodiment of this application provides a computer-readable storage medium. The computer-readable storage medium stores a computer program or instructions. When the computer program or the instructions is/are run on a computer, the computer is enabled to perform the target detection method described in any one of the first aspect or the possible implementations of the first aspect.

According to a fourth aspect, an embodiment of this application provides a computer program product including instructions. When the instructions are run on a computer, the computer is enabled to perform the target detection method described in any one of the first aspect or the possible implementations of the first aspect.

According to a fifth aspect, an embodiment of this application provides a communications apparatus. The communications apparatus includes a processor and a storage medium, the storage medium stores instructions, and when the instructions are run by the processor, the target detection method described in the first aspect or the possible implementations of the first aspect is implemented.

According to a sixth aspect, an embodiment of this application provides a communications apparatus. The communications apparatus includes one or more modules, configured to implement the method according to the first aspect. The one or more modules may correspond to the steps in the method according to the first aspect. According to a seventh aspect, an embodiment of this application provides a chip. The chip includes a processor and a communications interface. The communications interface is coupled to the processor, the processor is configured to run a computer program or instructions, to implement the target detection method in any one of the first aspect or the possible implementations of the first aspect, and the communications interface is configured to communicate with another module other than the chip.

Specifically, the chip provided in this embodiment of this application further includes a memory, configured to store the computer program or the instructions.

According to an eighth aspect, an embodiment of this application provides a communications apparatus. The communications apparatus includes a processor, the processor is coupled to a memory, the memory stores a computer program or instructions, and the processor is configured to run the computer program or the instructions stored in the memory, to implement the target detection method described in any one of the first aspect or the possible implementations of the first aspect.

Any apparatus, computer storage medium, computer program product, chip, or communications system provided above is configured to perform the corresponding method provided above. Therefore, for beneficial effects that can be achieved by the apparatus, computer storage medium, computer program product, chip, or communications system provided above, refer to the beneficial effects of the corresponding solution in the corresponding method provided above. Details are not described herein again.

### BRIEF DESCRIPTION OF DRAWINGS

FIG. 1 is a schematic diagram 1 of locations of an image target and a radar target according to an embodiment of this application;
FIG. 2 is a schematic diagram 2 of locations of an image target and a radar target according to an embodiment of this application;
FIG. 3 is a schematic diagram 3 of locations of an image target and a radar target according to an embodiment of this application;
FIG. 4 is a schematic diagram 4 of locations of an image target and a radar target according to an embodiment of this application;
FIG. 5 is a schematic diagram 5 of locations of an image target and a radar target according to an embodiment of this application;
FIG. 6 is a schematic diagram of a structure of a communications device according to an embodiment of this application;
FIG 7 is a schematic flowchart of a target detection method according to an embodiment of this application;
FIG. 8 is a schematic diagram of a first region according to an embodiment of this application;
FIG. 9a is a schematic diagram 1 of locations of a first target and a second target according to an embodiment of this application;
FIG. 9b is a schematic diagram 2 of locations of a first target and a second target according to an embodiment of this application;
FIG. 10a is a schematic diagram 3 of locations of a first target and a second target according to an embodiment of this application;
FIG. 10b is a schematic diagram 4 of locations of a first target and a second target according to an embodiment of this application;
FIG. 10c is a schematic diagram 5 of locations of a first target and a second target according to an embodiment of this application;
FIG. 11 is a schematic diagram 6 of locations of a first target and a second target according to an embodiment of this application;
FIG. 12 is a schematic diagram 7 of locations of a first target and a second target according to an embodiment of this application;
FIG. 13 is a schematic diagram 8 of locations of a first target and a second target according to an embodiment of this application;
FIG. 14 is a schematic diagram 9 of locations of a first target and a second target according to an embodiment of this application;
FIG. 15 is a schematic diagram of a structure of a target detection apparatus according to an embodiment of this application;
FIG. 16 is a schematic diagram of a structure of another target detection apparatus according to an embodiment of this application; and
FIG. 17 is a schematic diagram of a structure of a chip according to an embodiment of this application.

### DESCRIPTION OF EMBODIMENTS

To clearly describe the technical solutions in embodiments of this application, words such as "first" and "second" are used in embodiments of this application to distinguish between same items or similar items that provide basically same functions or purposes. For example, a first sensor and a second sensor are merely intended to distinguish between different sensors, but are not intended to limit a sequence thereof. A person skilled in the art may understand that the words such as "first" and "second" limit neither of a quantity and an execution sequence, and the words such as "first" and "second" do not indicate a definite difference either.

It should be noted that, in this application, words such as "example" or "for example" are used for representing giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a relative concept in a specific manner.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

In this application, "at least one" means one or more, and "a plurality of" means two or more. "And/or" describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects. At least one of the following items (pieces) or a similar expression thereof means any combination of these items, including a single item (piece) or any combination of plural items (pieces). For example, at least one of a, b, or c may indicate: a, b, c, a and b, a and c, b and c, or a, b, and c, where a, b, and c may be singular or plural.

In an embodiment of this application, a target detected in an image captured by a monocular camera is referred to as an image target. In this embodiment of this application, a target detected in an image captured by a millimeter-wave radar is referred to as a radar target.

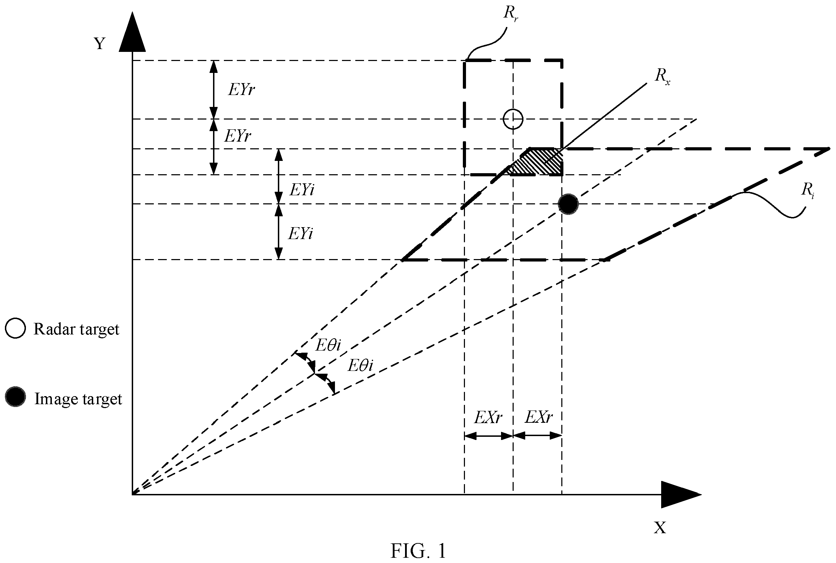

As shown in FIG. 1, for example, a vehicle is located at an origin O of a coordinate system, an X-axis represents a vehicle widthwise direction (widthwise direction), and a Y-axis represents a vehicle lengthwise direction (lengthwise direction). In FIG. 1, *EYr* indicates a location error of a radar target in a vertical direction, and *EXr* indicates a location error of the radar target in a horizontal direction, where *EYr* is less than *EXr*, *Rᵣ* indicates an error region of the radar target, and *Rᵣ* is determined by *EYr* and *EXr*. *Eθi* indicates angle-measuring precision of an image target, and *EYi* indicates distance-measuring precision of the image target. Detection of the image target is based on the monocular camera, and *Eθi* is higher than *EYi.* Similarly, *Rᵢ* indicates an error region of the image target, and *Rᵢ* is determined by *Eθi* and *EYi .* An area of an overlapping region (for example, a shadow part *Rₓ* in FIG. 1) between the error region of the radar target and the error region of the image target reflects a possibility that the image target and the radar target are from a same object, that is, a possibility that the image target and the radar target are a same target. When the area of the overlapping region is greater than a threshold, it is determined that the radar target and the image target are a same target.

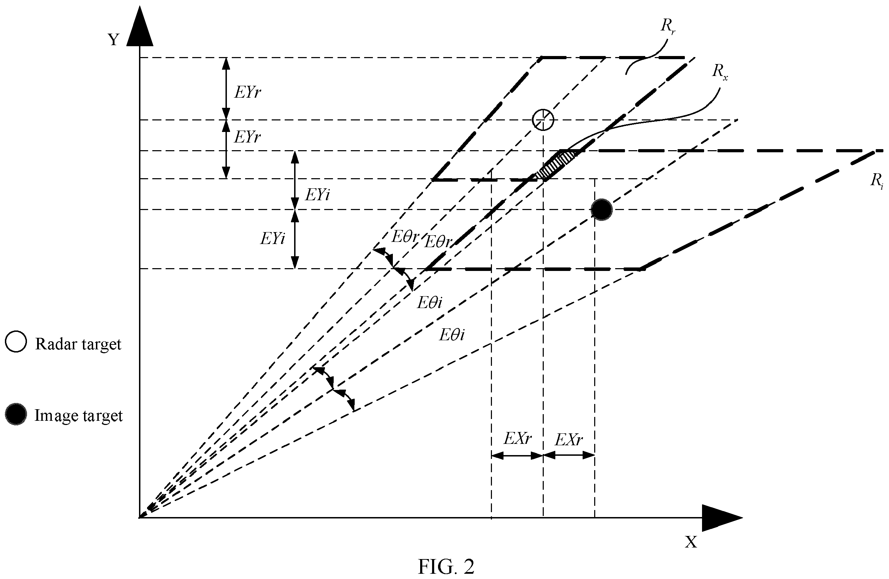

As shown in FIG. 2, a difference between FIG. 2 and FIG. 1 lies in that an error region of a radar target in FIG. 2 is determined by a vertical direction error *EYr* and an angle-measuring error *Eθr.* A shape of the error region *Rᵣ* of the radar target in FIG. 2 is similar to a parallelogram (a shape of the error region of the radar target in FIG. 1 is a rectangle). In this case, whether the image target and the radar target are a same target may still be determined based on a relationship between a threshold and the overlapping area of the error region of the radar target and the error region of the image target. In this embodiment of this application, determining whether two targets (for example, the image target and the radar target) are a same target may also be understood as determining whether the two targets are from a same object.

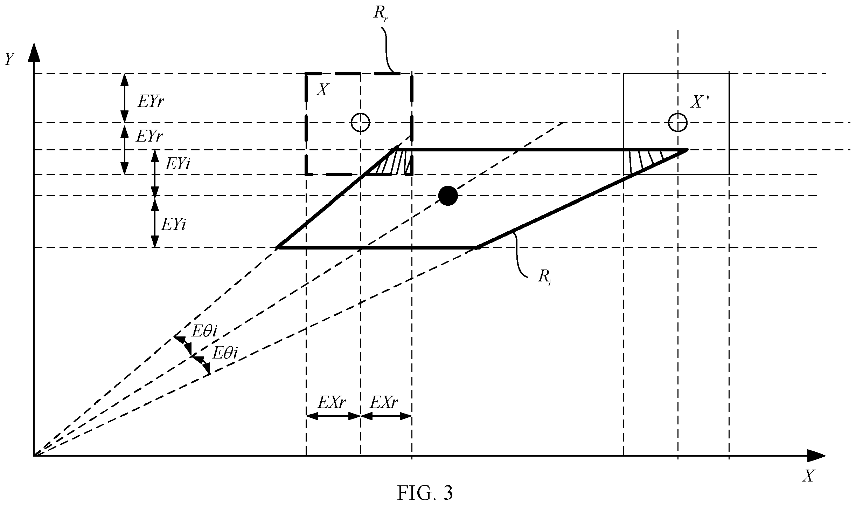

Although whether the image target and the radar target are a same target may be determined based on a fact that an area of an overlapping region is greater than a threshold, the following problem still exists: Even if overlapping areas are the same, target location relationships may be different. Therefore, it may be incorrectly determined that the image target and the radar target are a same target. As shown in FIG. 3, if an overlapping area between an error region of a radar target at a location *X* and an error region of an image target is A, and an overlapping area between an error region of a radar target at a location *X*' and the error region of the image target is B, if both A and B are greater than a threshold, and A and B are equal, theoretically, according to the foregoing solution, a possibility that the radar target at the location *X* and the image target are a same target should be the same as a possibility that the radar target at the location *X*' and the image target are a same target, that is, the radar target at the location *X* and the image target are a same target, and the radar target at the location *X*' and the image target are also a same target. However, in an actual process, the following state may exist: The radar target at the location *X* and the radar target at the location *X*' are not a same radar target. When the radar target at the location *X* and the radar target at the location *X*' are not a same radar target, the possibility that the radar target at the location *X* and the image target are a same target should be different from the possibility that the radar target at the location *X*' and the image target are a same target. For example, the radar target at the location *X* and the image target are a same target, but the radar target at the location *X*' and the image target are not a same target. However, if based only on a relationship between the overlapping area and the threshold, because both A and B are greater than the threshold, it may be determined that the radar target at the location *X*' and the image target are a same target, and the radar target at the location *X* and the image target are a same target. However, this conclusion is opposite to the fact. Therefore, incorrect determining is caused based only on the relationship between the overlapping area and the threshold. In addition, even if the radar target at the location *X*' and the radar target at the location *X* belong to a same radar target, the possibilities that a same image target and each of the radar target at the location *X*' and the radar target at the location *X* are a same target are different.

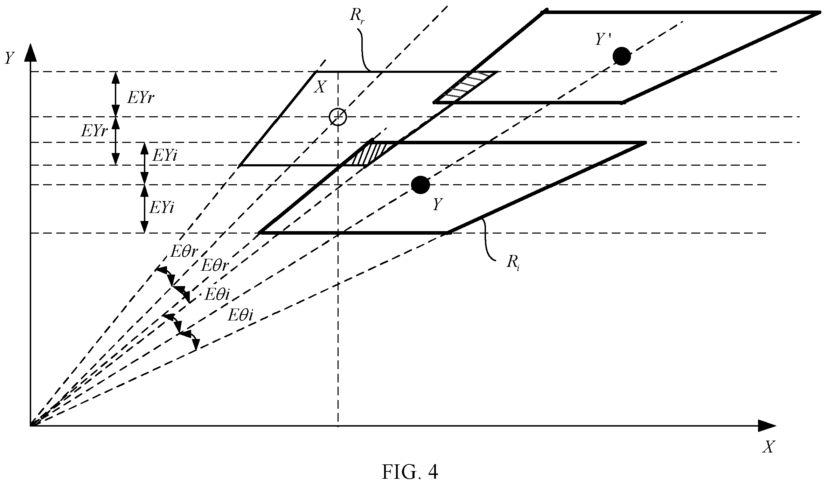

Moreover, as shown in FIG. 4, an overlapping area between an error region *Rᵢ* of an image target at a location *Y* and an error region *Rᵣ* of a radar target is C, and an overlapping area between an error region *Rᵢ* of an image target at a location *Y*' and the error region *Rᵣ* of the radar target is D. If both C and D are greater than a threshold, and C and D are equal, theoretically, according to the foregoing solution, a possibility that the image target at the location *Y*' and the radar target are a same target should be equal to a possibility that the image target at the location *Y* and the radar target are a same target. That is, the image target at the location *Y*' and the radar target are a same target, and the image target at the location *Y* and the radar target are also a same target. However, if image targets at different locations are not a same image target, the possibility that the image target at the location *Y*' and the radar target are a same target should be different from the possibility that the image target at the location *Y* and the radar target are a same target. However, based only on a relationship between the overlapping area and the threshold, because both C and D are greater than the threshold, the foregoing solution may determine that the image target at the location *Y*' and the radar target are a same target, and the image target at the location *Y* and the radar target are a same target. However, this conclusion is opposite to the fact. Therefore, incorrect determining is caused based only on the relationship between the overlapping area and the threshold.

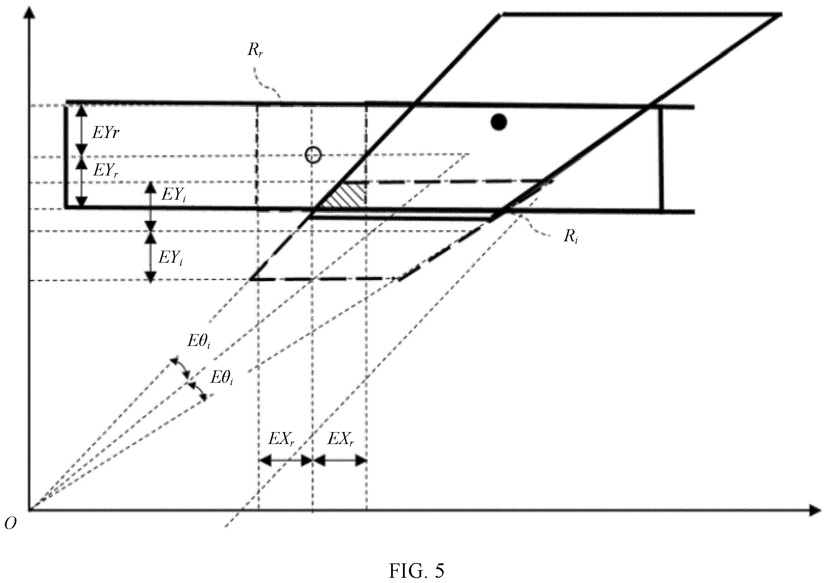

As shown in FIG. 5, when detection errors of a camera and a radar in a horizontal direction continuously increase, an overlapping area between an error region of an image target and an error region of a radar target reaches a maximum value. In this case, the image target and the radar target may appear at more different locations, and the overlapping area may remain unchanged. That is, it is impossible to accurately determine, based on the overlapping area, whether the image target and the radar target are a same target. Therefore, a possibility of incorrect determining in this case is greatly increased.

It can be learned that, from the foregoing analysis, during determining whether an image target and a radar target are a same target, incorrect determining may be caused based only on a measure of an overlapping area between an error region of the radar target and an error region of the image target. Based on this, an embodiment of this application provides a target detection method. In the method, in addition to the measure of the overlapping area between the error region of the radar target and the error region of the image target, another measure is further considered to improve accuracy of determining whether the image target and the radar target are a same target.

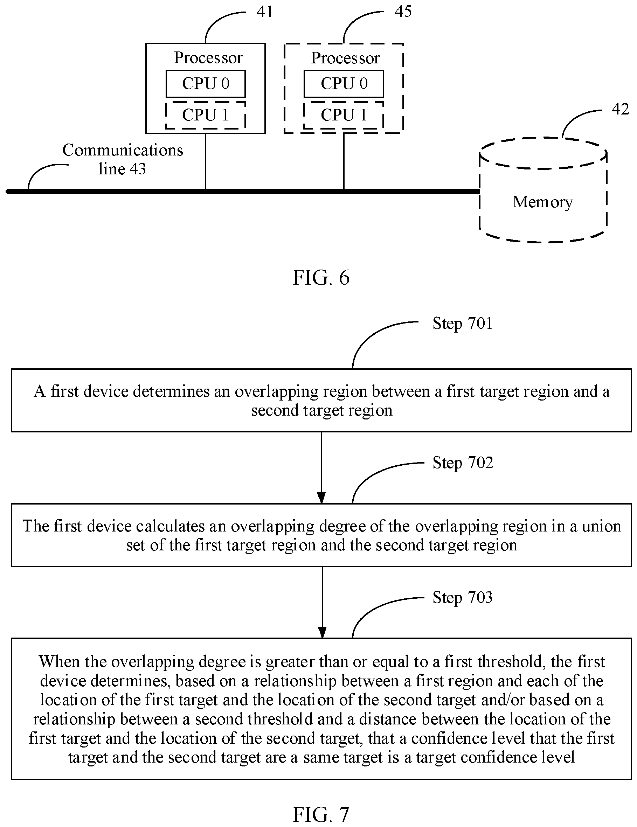

FIG. 6 is a schematic diagram of a hardware structure of a target detection apparatus according to an embodiment of this application. For a structure of a first device in this embodiment of this application, refer to the structure shown in FIG. 6. The target detection apparatus includes a processor 41 and a communications line 43.

Optionally, the target detection apparatus may further include a memory 42.

The processor 41 may be a general-purpose central processing unit (central processing unit, CPU), a microprocessor, an application-specific integrated circuit (application-specific integrated circuit, ASIC), or one or more integrated circuits configured to control program execution of the solutions of this application.

The communications line 43 may include a path for transferring information between the foregoing components.

The memory 42 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer. However, this is not limited herein. The memory may exist independently, and is connected to the processor through the communications line 43. The memory may alternatively be integrated with the processor.

The memory 42 is configured to store computer-executable instructions for performing the solutions of this application, and the processor 41 controls execution of the computer-executable instructions. The processor 41 is configured to execute the computer-executable instructions stored in the memory 42, to implement a target detection method provided in the following embodiments of this application.

It may be understood that, if the first device is a vehicle, the target detection apparatus may further include a first sensor and a second sensor.

It may be understood that steps performed by the first device in a target detection method in embodiments of this application may alternatively be performed by a chip applied to the first device. In the following embodiments, an example in which the target detection method is performed by the first device is used for description.

Mutual reference may be made between embodiments of this application. For example, for same or similar steps, mutual reference may be made between method embodiments, apparatus embodiments, or system embodiments. This is not limited.

FIG. 7 shows an embodiment of a target detection method according to an embodiment of this application. The method includes the following steps.

Step 701: A first device determines an overlapping region between a first target region and a second target region, where the first target region is determined based on a detection error of a first sensor and a location of a first target detected by the first sensor, the second target region is determined based on a detection error of a second sensor and a location of a second target detected by the second sensor.

The first target region includes the location of the first target. In other words, the location of the first target is in the first target region. The second target region includes the location of the second target. In other words, the location of the second target is in the second target region.

In this embodiment of this application, the overlapping region between the first target region and the second target region is a common region of the first target region and the second target region. In other words, the overlapping region is an intersection of the first target region and the second target region, or the overlapping region belongs to both the first target region and the second target region.

In this embodiment of this application, a target detected in an image captured by the first sensor may be referred to as the first target, and a target detected in an image captured by the second sensor may be referred to as the second target. The first device in this embodiment of this application may be a vehicle, or a chip applied to a vehicle, or a component (for example, an electronic control unit (Electronic Control Unit, ECU) or an automatic driving controller) applied to a vehicle, or the first device may be a server, or a chip applied to a server. The electronic control unit is also referred to as a "trip computer" and a "vehicle-mounted computer." Specifically, the first device in this embodiment of this application may be a component that has an information processing function in the vehicle.

For example, the detection error of the first sensor is a location error of the first sensor. For example, the detection error of the first sensor includes a first detection error and a second detection error. For example, the first detection error is a distance-measuring error of the first sensor in a vertical direction, and the second detection error is an angle-measuring error of the first sensor or a distance-ranging error of the first sensor in a horizontal direction. The detection error of the first sensor is predetermined based on a feature of the first sensor.

For example, the detection error of the second sensor is a location error of the second sensor. For example, the detection error of the second sensor includes a third detection error and a fourth detection error. The third detection error is an angle-measuring error of the second sensor, and the fourth detection error is a distance-measuring of the second sensor. The detection error of the second sensor is predetermined based on a feature of the second sensor. The distance-measuring error of the second sensor may be a distance-measuring error of the second sensor in a horizontal direction or a distance-measuring error of the second sensor in a vertical direction.

The "error" of the sensor in this embodiment of this application may also be replaced with "precision" of the sensor. For example, an angle-measuring error may be replaced with angle-measuring precision. The detection error in this embodiment of this application may also be referred to as a measurement error.

In a possible implementation, in this embodiment of this application, the first target region is limited by a closed region enclosed by a fifth line and a sixth line that are perpendicularly disposed and that are parallel and a seventh line and an eighth line that are horizontally disposed and that are parallel. The fifth line and the sixth line are disposed in parallel, a shortest distance between the fifth line and the location of the first target is equal to a shortest distance between the sixth line and the location of the first target, and the shortest distance between the fifth line and the location of the first target is the distance-measuring error of the first sensor in the vertical direction. The seventh line and the eighth line are disposed in parallel, a shortest distance between the seventh line and the location of the first target is equal to a shortest distance between the eighth line and the location of the first target, and the shortest distance between the seventh line and the location of the first target is the distance-ranging error of the first sensor in the horizontal direction.

In other words, in this embodiment of this application, the first target region is limited by a closed region enclosed by the distance-measuring error of the first sensor in the vertical direction that extends up and down along the vertical direction from the location of the first target and the distance-measuring error of the first sensor in the horizontal direction that extends leftwards and rightwards along the horizontal direction and that is centered on the location of the first target, that is, the location of the first target is a center of the first target region. Alternatively, in this embodiment of this application, the first target region is limited by a closed region enclosed by the distance-measuring error of the first sensor in the vertical direction that extends up and down along the vertical direction and that is centered on the location of the first target and the distance-measuring error of the first sensor in the horizontal direction that extends leftwards and rightwards along the horizontal direction, that is, the location of the first target is a center of the first target region.

In a specific implementation, in this embodiment of this application, the first target region may be indicated as *Y*₁*-EYᵣ*≤*Yᵣ*≤*Y*₁+*EYr* and *X*₁*-EXr*≤*Xᵣ*≤*X*₁+*EXr,* where *Y*₁ indicates a coordinate of the first target in the vertical direction, and *X*₁ indicates a coordinate of the first target in the horizontal direction; ±*EYr* indicates the distance-measuring error of the first sensor in the vertical direction (a Y-axis direction), and ±*EXr* indicates the distance-measuring error of the first sensor in the horizontal direction (an X-axis direction); and *Yᵣ* indicates a coordinate of the first target region in the vertical direction, and *Xᵣ* indicates a coordinate of the first target region in the horizontal direction.

In another possible implementation, in this embodiment of this application, the first target region is limited by a closed region enclosed by the distance-measuring error of the first sensor in the vertical direction that extends up and down along the vertical direction and that is centered on the location of the first target and the angle-measuring error of the first sensor that uses a connection line between the location of the first target and a reference point as an axis and that rotates leftward and rightward. In this case, for a specific shape of the first target region, refer to *Rᵣ* in FIG. 4.

In a specific implementation, in this embodiment of this application, the first target region may be indicated as *Y*₁*-EYr*≤*Yᵣ*≤*Y*₁+*EYr* and *X*₁*-Eθr*≤*Xᵣ*≤*X*₁+*Eθr*, where *Y*₁ indicates the coordinate of the first target in the vertical direction, and *X*₁ indicates the coordinate of the first target in the horizontal direction; ±*EYr* indicates the distance-measuring error of the first sensor in the vertical direction (the Y-axis direction), and ±*Eθr* indicates the angle-measuring error of the first sensor; and *Yᵣ* indicates the coordinate of the first target region in the vertical direction, and *Xᵣ* indicates the coordinate of the first target region in the horizontal direction.

In another possible implementation, in this embodiment of this application, the second target region is limited by a closed region enclosed by the distance-measuring error of the second sensor in the vertical direction that extends up and down along the vertical direction and that is centered on the location of the second target and the angle-measuring error of the second sensor that uses a connection line between the location of the second target and the reference point as an axis and that rotates leftward and rightward.

In a specific implementation, in this embodiment of this application, the second target region may be indicated as *Y*₂*-EYi*≤*Yᵢ*≤*Y*₂+*EYi* and *X*₂*-Eθi*≤*Xᵢ*≤*X*₂+*Eθi*, where *Y*₂ indicates a coordinate of the second target in the vertical direction (the Y-axis direction), and *X*₂ indicates a coordinate of the second target in the horizontal direction (the X-axis direction); ±*EYi* indicates the distance-measuring error of the second sensor in the vertical direction (the Y-axis direction), and ±*Eθi* indicates the angle-measuring error of the second sensor in a horizontal azimuth (the X-axis direction); and *Yᵢ* indicates a coordinate of the second target region in the vertical direction, and *Xᵢ* indicates a coordinate of the second target region in the horizontal direction.

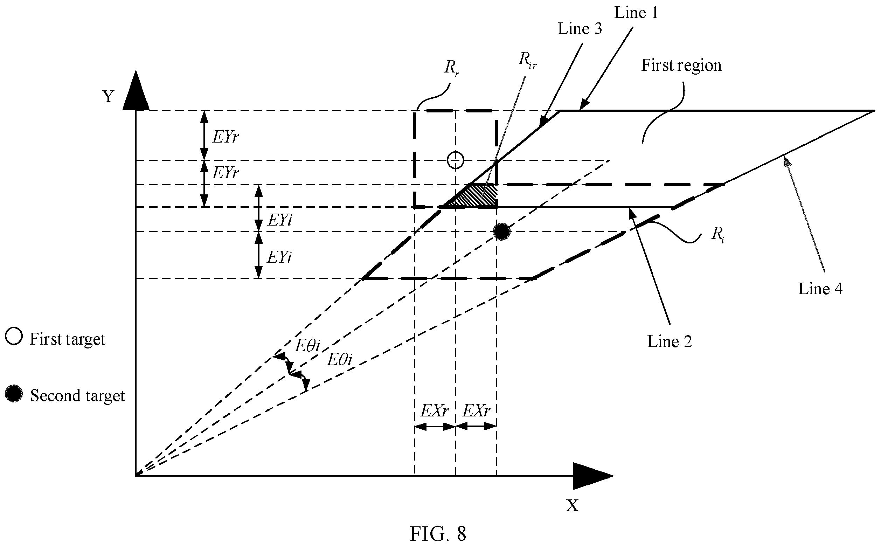

As shown in FIG. 8, *Rᵢᵣ* indicates the overlapping region (that is, a shadow part in FIG. 8) between the first target region and the second target region, and *Rᵣ* indicates the first target region, that is, the first target region is limited by *Xᵣ* and *Yᵣ*. In other words, a width of a coordinate range of the first target region in the vertical direction (the Y-axis direction) is 2*EYr,* and a width of a coordinate range of the first target region in the horizontal direction (the X-axis direction) is *2EXr. Rᵢ* indicates the second target region, that is, the second target region is limited by *Xᵢ* and *Yᵢ* . In other words, a width of a coordinate range of the second target region in the vertical direction (the Y-axis direction) is 2*EYi,* and a width of an azimuth range of the second target region in the horizontal azimuth (the X-axis direction) is 2*Eθi.*

The location of the first target is a location of the first target relative to a reference point on an XY plane, an X-axis direction of the XY plane is a vehicle widthwise direction, and a Y-axis direction of the XY plane is a vehicle lengthwise direction. The location of the second target is a location of the second target relative to the reference point on the XY plane.

It may be understood that the reference point on the XY plane may be a coordinate origin O shown in FIG. 8, the coordinate origin O may be a location of the vehicle, and the first sensor and the second sensor are deployed on the vehicle.

Step 702: The first device calculates an overlapping degree of the overlapping region in a union set of the first target region and the second target region.

In a specific implementation, the overlapping degree is a proportion of the overlapping region between the first target region and the second target region in the union set of the first target region and the second target region. For example, the overlapping degree = (an intersection set of *Rᵣ* and *Rᵢ* )/(a union set of *Rᵣ* and *Rᵢ*)*,* where *Rᵣ* indicates the first target region, and *Rᵢ* indicates the second target region.

In another example, step 702 in this embodiment of this application may be replaced with the following step: The first device calculates an overlapping area of the overlapping region. For how to calculate the area of the overlapping region, refer to descriptions in the conventional technology. This is not limited in this embodiment of this application. It may be understood that, if the overlapping degree is the proportion of the overlapping region between the first target region and the second target region in the union set of the first target region and the second target region, a first threshold may also be a preset proportion value.

If the first device calculates the overlapping area, the first threshold may be a preset area threshold. This is not limited in this embodiment of this application.

Step 703: When the overlapping degree is greater than or equal to the first threshold, the first device determines, based on a relationship between a first region and each of the location of the first target and the location of the second target and/or based on a relationship between a second threshold and a distance between the location of the first target and the location of the second target, that a confidence level that the first target and the second target are a same target is a target confidence level.

The first region is determined based on the first detection error of the first sensor and the third detection error of the second sensor; the detection error of the first sensor includes the first detection error and the second detection error, and precision of the first detection error is higher than precision of the second detection error; and the detection error of the second sensor includes the third detection error and the fourth detection error, and precision of the third detection error is higher than precision of the fourth detection error.

In this embodiment of this application, the confidence level that the first target and the second target are the same target may be understood as a possibility that the first target and the second target are a same target or a possibility that the first target and the second target are from a same object.

The first threshold and the second threshold in this embodiment of this application may be values predefined in a protocol or values determined by the first device.

In this embodiment of this application, that the first region is determined based on the first detection error of the first sensor and the third detection error of the second sensor is based on the following fact:
For example, the first sensor is a radar. Measurement precision of the radar in a vertical direction is higher than measurement precision of the radar in a horizontal direction (in other words, distance-measuring of the radar in a Y direction is accurate, and accuracy of X/azimuth-measuring is lower than that of the vehicle-mounted radar in the Y direction). For example, the second sensor is a camera. Measurement precision of an azimuth of the camera is higher than precision in a horizontal or vertical direction (azimuth-measuring of a monocular camera (camera) is accurate, and distance-measuring is relatively inaccurate).

For example, as shown in FIG. 8, the first region is a closed region enclosed by intersection of a line 3 and a line 4 and parallel lines (a line 1 and a line 2) whose distances from the location of the first target in the vertical direction are errors of the first sensor in the vertical direction. The line 3 intersects with the line 4, and all included angles between a line that passes through the location of the second target and each of the line 3 and the line 4 are angle-measuring errors of the second sensor.

This embodiment of this application provides the target detection method. In the method, the first device determines the overlapping degree of the overlapping region between the first target region and the second target region, and when the overlapping degree is greater than or equal to the first threshold, the first device determines, based on the relationship between the first region and each of the location of the first target and the location of the second target and/or based on the relationship between the second threshold and the distance between the location of the first target and the location of the second target, that the confidence level that the first target and the second target are the same target is the target confidence level. In this way, when the overlapping degree is greater than or equal to the first threshold, accuracy of the confidence level that the first target and the second target are the same target is further determined based on the relationship between the first region and each of the location of the first target and the location of the second target and/or based on the relationship between the second threshold and the distance between the location of the first target and the location of the second target, thereby reducing incorrect determining.

Optionally, the first sensor and the second sensor may detect a target in a same range. In other words, the location of the first target and the location of the second target are in a same range.

In this embodiment of this application, after determining the confidence level that the first target and the second target are the same target, the first device assists in subsequent target fusion. Because measurement errors (which may also be referred to as detection errors) of different sensors are different, the first target is detected by the first sensor, and the second target is detected by the second sensor. If the first device determines that the first target and the second target are a same target, the first device may subsequently perform fusion on the location of the first target and the location of the second target, to obtain a final location of the target after the fusion. However, if the first device determines that the first target and the second target are not a same target, the first device does not need to subsequently perform fusion on the location of the first target and the location of the second target.

In this embodiment of this application, if the overlapping degree is greater than or equal to the first threshold, the first device may determine that the first target and the second target are not a same target.

In a possible example, in this embodiment of this application, the first sensor is a radar, and the second sensor is a camera. For example, the radar may be a millimeter-wave radar, and the camera may be a monocular camera.

The millimeter-wave radar in this embodiment of this application is installed on a middle front part of a vehicle, and is configured to detect a target of another vehicle or pedestrian by using a millimeter wave. The millimeter-wave radar sends a millimeter wave from the vehicle to a front when scanning along a horizontal plane, and receives the reflected millimeter wave, to transmit transmitted and received data to the first device in a form of a radar signal. Alternatively, the millimeter-wave radar transmits transmitted and received data to the vehicle in a form of a radar signal, and the vehicle transmits the data to a server. The monocular camera includes a charge coupled device (charge coupled device, CCD) camera, and the monocular camera is installed on a middle front part of the vehicle. The monocular camera transmits data of a captured image to the first device in a form of an image signal. Alternatively, the monocular camera transmits data of a captured image to the vehicle in a form of an image signal, and the vehicle transmits the data to the server.

In this embodiment of this application, the relationship between the first region and each of the location of the first target and the location of the second target includes: both the location of the first target and the location of the second target are in the first region. Alternatively, the relationship between the first region and each of the location of the first target and the location of the second target includes: one or more of the location of the first target and the location of the second target are outside the first region.

In this embodiment of this application, the relationship between the second threshold and the distance between the location of the first target and the location of the second target includes: The distance between the location of the first target and the location of the second target is greater than or equal to the second threshold, and the distance between the location of the first target and the location of the second target is less than or equal to the second threshold.

In a possible implementation, in step 703 in this embodiment of this application, when the overlapping degree is greater than or equal to the first threshold, that the first device determines, based on the relationship between the first region and each of the location of the first target and the location of the second target, that the confidence level that the first target and the second target are the same target is the target confidence level includes: When the overlapping degree is greater than or equal to the first threshold, and both the location of the first target and the location of the second target are in the first region, the first device determines that the confidence level that the first target and the second target are the same target is the target confidence level and the target confidence level is greater than or equal to a first confidence level threshold.

It may be understood that, that the target confidence level is greater than or equal to the first confidence level threshold in this embodiment of this application may be replaced with that the first target and the second target are a same target. The first confidence level threshold in this embodiment of this application may be set according to a requirement. This is not limited in this embodiment of this application.

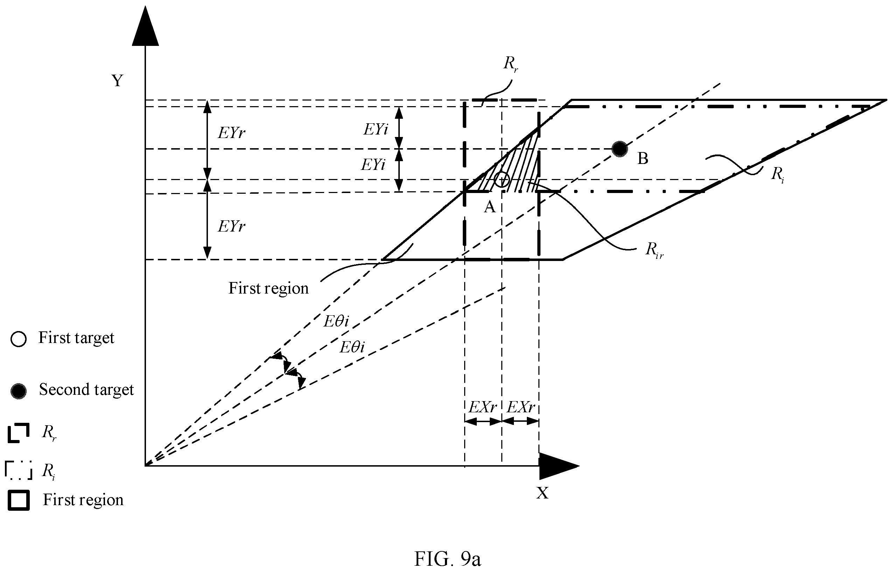

As shown in FIG. 9a, an example in which the first target is a target A and the second target is a target B is used. Both a location of the target A and a location of the target B are in the first region, and an overlapping degree of an overlapping region (a shadow part *Rₜᵣ* in FIG. 9a) is greater than or equal to the first threshold. In this case, the first device may determine that a confidence level that the target A and the target B are a same target is a target confidence level and the target confidence level is greater than or equal to the first confidence level threshold. Alternatively, the first device determines that the target A and the target B are a same target.

In a possible implementation, when the overlapping degree is greater than or equal to the first threshold, and both the location of the first target and the location of the second target are in the first region, the target confidence level is a first confidence level. When the overlapping degree is greater than or equal to the first threshold, and when one or more of the location of the first target and the location of the second target are outside the first region, the target confidence level is a second confidence level. In other words, when the overlapping degree is greater than or equal to the first threshold, the target confidence level obtained when both the location of the first target and the location of the second target are in the first region is greater than the target confidence level obtained when at least one of the location of the first target and the location of the second target is outside the first region.

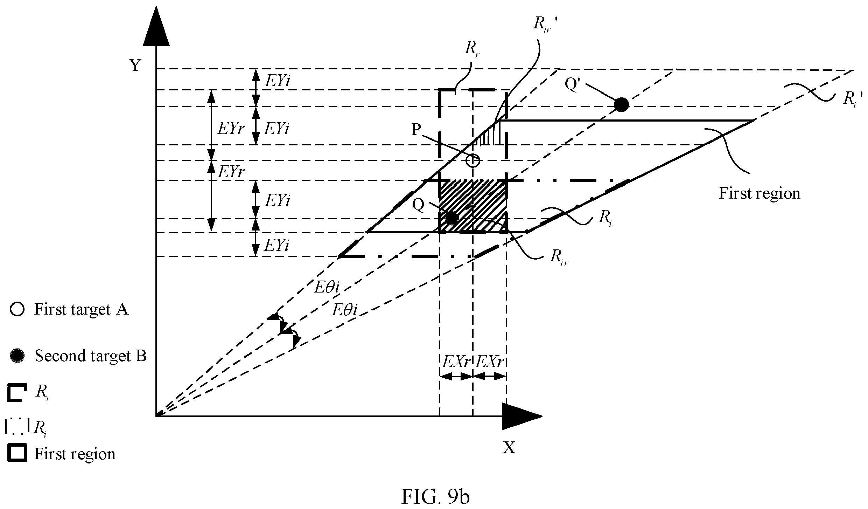

As shown in FIG. 9b, an example in which the first target is a target A and the second target is a target B is used to show a case in which the target B and the target A that are at different locations are a same target when the target B is at different locations. For example, the target B is at a location Q (X₂₁, Y₂₁), or the target B is at a location Q' (X₂₂, Y₂₂). The location Q' is outside the first region, and the location Q is in the first region. It is assumed that, when the target B is at the location Q, a second target region determined based on the location Q of the target B and a first error parameter of the second sensor is *Rᵢ.* In this case, an overlapping region (a shadow part in FIG. 9b) between a first target region *R,* and the second target region *Rᵢ* is *Rᵢᵣ.* It is assumed that, when the target B is at the location Q', a second target region determined based on the location Q' of the target B and the second detection error of the second sensor is *Rᵢ*'. In this case, an overlapping region (a shadow part in FIG. 9b) between *Rᵢ*' and the first target region *Rᵣ* is *Rᵢᵣ* ' . If both the overlapping degree of *Rᵢᵣ* and the overlapping degree of *Rᵢᵣ*' are greater than or equal to the first threshold, that is, regardless of whether the target B is at the location Q or the location Q', the overlapping regions between the first target region and each of *Rᵢ* and *Rᵢ*' are greater than or equal to the first threshold. However, when the target B is at the location Q, the location of the target B is in the first region, and when the target B is at the location Q', the location of the target B is outside the first region. In this case, a target confidence level that the target A and the target B at the location Q are a same target is greater than a target confidence level that the target A and the target B at the location Q' are a same target.

In a possible implementation, in step 703 in this embodiment of this application, when the overlapping degree is greater than or equal to the first threshold, that the first device determines, based on the relationship between the first region and each of the location of the first target and the location of the second target, that the confidence level that the first target and the second target are the same target is the target confidence includes: When the overlapping degree is greater than or equal to the first threshold, if one or more of the location of the first target and the location of the second target are outside the first region, the first device determines that the confidence level that the first target and the second target are the same target is the target confidence level and the target confidence level is less than or equal to a second confidence level threshold.

In this embodiment of this application, that the confidence level that the first target and the second target are the same target is the target confidence level and the target confidence level is less than or equal to a second confidence level threshold may be replaced with that the first target and the second target are not a same target. The first confidence level threshold may be the same as or different from the second confidence level threshold. This is not limited in this embodiment of this application.

For example, as shown in FIG. 9b, the first target is the target A at a location P, and the second target is the target B at the location Q'. It can be learned from FIG. 9b that the location P of the target A is in the first region, and the location Q' of the target B is outside the first region. In this case, the first device may determine that the confidence level that the target A and the target B are the same target is the target confidence and the target confidence level is less than or equal to the second confidence level threshold.

In a possible implementation, in step 703 in this embodiment of this application, when the overlapping degree is greater than or equal to the first threshold, that the first device determines, based on the relationship between the second threshold and the distance between the location of the first target and the location of the second target, that the confidence level that the first target and the second target are the same target is the target confidence level includes: When the overlapping degree is greater than or equal to the first threshold, and the distance between the location of the first target and the location of the second target is less than or equal to the second threshold, the first device determines that the confidence level that the first target and the second target are the same target is the target confidence level and the target confidence is greater than or equal to the first confidence level threshold.

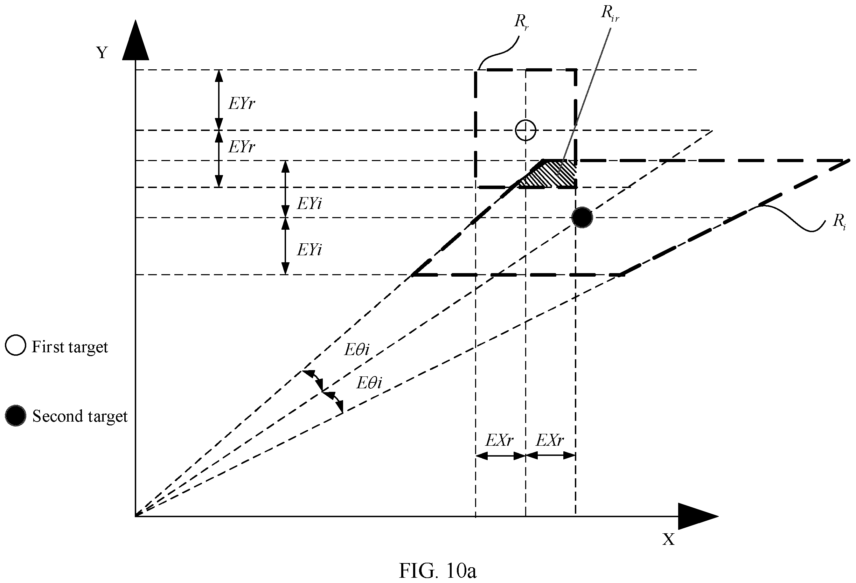

For example, as shown in FIG. 10a, an overlapping degree of an overlapping region (for example, a shadow part *Rᵢᵣ* in FIG. 10a) between the first target region and the second target region is greater than or equal to the first threshold, and a distance between a location of the first target and a location of the second target is less than the first threshold, the confidence level that the first target and the second target are the same target is the target confidence level and the target confidence level is greater than or equal to the first confidence level threshold.

For a manner of calculating the distance between the locations of the two targets in this embodiment of this application, refer to the conventional technology. Details are not described herein.

In a possible implementation, when the overlapping degree is greater than or equal to the first threshold, and the distance between the location of the first target and the location of the second target is less than or equal to the second threshold, the confidence level that the first target and the second target are the same target is a third confidence level. When the overlapping degree is greater than or equal to the first threshold, and the distance between the location of the first target and the location of the second target is greater than the second threshold, the confidence level that the first target and the second target are the same target is a fourth confidence level. The third confidence level is greater than the fourth confidence level.

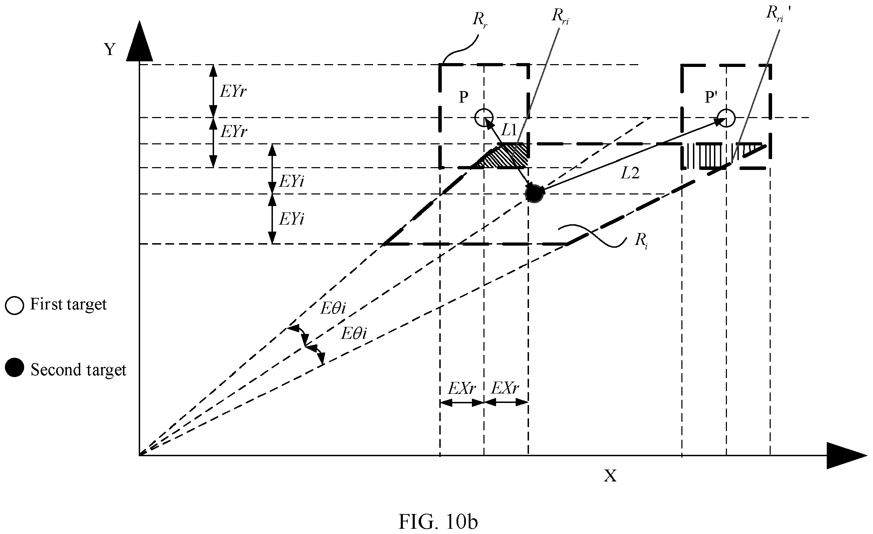

For example, as shown in FIG. 10b, the first target is a target A, and the second target is a target B. FIG. 10b shows a confidence level that the target A at different locations and a same target B are a same target when the target A is at different locations (for example, the location of the target A may be a location P (X₁₁, Y₁₁), or the location of the target A may be a location P' (X₁₂, Y₁₂)). It is assumed that, when the target A is at the location P, a first target region determined based on the location P of the target A and the detection error of the first sensor is *Rᵣ.* In this case, an overlapping region between *R,* and the second target region *Rᵢ* is *Rᵣᵢ,* and an overlapping degree of *Rᵣᵢ* is *S*1. It is assumed that, when the target A is at the location P', a first target region determined based on the location P' of the target A and the detection error of the first sensor is *Rᵣ'.* In this case, an overlapping region between *Rᵣ*' and the second target region *Rᵢ* is *Rᵣᵢ*'*,* and an overlapping degree of *Rᵣᵢ*' is *S*2. It is assumed that both *S*1 and *S*2 are greater than or equal to the first threshold, that is, the overlapping regions between the second target region and each of the first target region *R,* corresponding to the target A at the location P and the first target region *Rᵣ'* corresponding to the target A at the location P' are both greater than or equal to the first threshold. When the target A is at the location P, a distance between the location of the target A and the location of the target B is *L*1; and when the target A is at the location P', a distance between the target A and the target B is *L*2*. L*1 is less than *L*2, that is, compared with the target A at the location P', the target B is closer to the target A at the location P. Therefore, the third confidence level that the target B and the target A at the location P are a same target is greater than the fourth confidence level that the target B and the target A at the location P' are a same target.

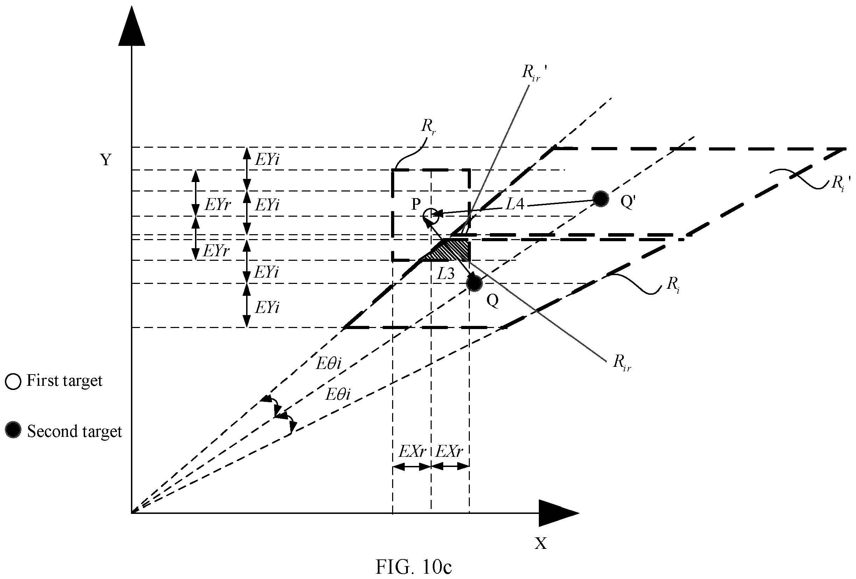

For example, as shown in FIG. 10c, the second target is a target B, and the first target is a target A. FIG. 10c shows a confidence level that the target B at different locations (for example, the target B is at a location Q (X₂₁, Y₂₁), or the target B is at a location Q' (X₂₂, Y₂₂)) and a same target A are a same target. It is assumed that, when the target B is at the location Q, a second target region determined based on the location Q of the target B and the detection error of the second sensor is *Rᵢ.* In this case, an overlapping region between the first target region *Rᵣ* and the second target region *R,* is *Rᵢᵣ,* and an overlapping degree of *Rᵢᵣ* is *S*3. When the target B is at the location Q', a second target region determined based on the location Q' of the target B and the detection error of the second sensor is *Rᵢ'*. An overlapping region between *Rᵢ'* and the first target region *Rᵣ* is *Rᵢᵣ* ', and an overlapping degree of *Rᵣᵢ*' is *S*4. If both *S*3 and *S*4 are greater than or equal to the first threshold, that is, the overlapping degrees of the overlapping regions between the first target region and each of *Rᵢ* corresponding to the target B at the location Q and *Rᵢ'* corresponding to the target B at the location Q' are greater than or equal to the first threshold, when the target B is at the location Q, a distance between the location of the target A and the location of the target B at the location Q is *L*3; and when the target B is located at the location Q', a distance between the location of the target A and the location of the target B at the location Q'is *L*4*. L*3 is less than *L*4, that is, compared with the target B at the location Q', the location of the target A is closer to the location of the target B at the location Q. Therefore, a confidence level that the target A and the target B at the location Q are a same target is greater than a confidence level that the target A and the target B at the location Q' are a same target.

It can be learned from FIG. 10b and FIG. 10c that when the overlapping degree is greater than or equal to the first threshold, a shorter distance between locations of any two targets (for example, less than or equal to the second threshold) indicates a higher probability that the any two targets are a same target.

It should be noted that FIG. 10b and FIG. 10c separately use an example in which a target is at different locations and a confidence level between a same target and the target at different locations is calculated. It may be understood that the target B at the location Q and the target B at the location Q' may not be a same target.

In a possible implementation, in step 703 in this embodiment of this application, when the overlapping degree is greater than or equal to the first threshold, that the first device determines, based on the relationship between the second threshold and the distance between the location of the first target and the location of the second target, that the confidence level that the first target and the second target are the same target is the target confidence level includes: When the overlapping degree is greater than or equal to the first threshold, and the distance between the location of the first target and the location of the second target is greater than the second threshold, the first device determines that the confidence level that the first target and the second target are the same target is the target confidence level and the target confidence is less than or equal to the second confidence level threshold.

For example, as shown in FIG. 10c, the first target is the target A at the location P, and the second target is the target B at the location Q'. It can be learned from FIG. 10c that the distance between the location of the target A and the location of the target B at the location Q'is *L*4. *L*4 is greater than the second threshold. In this case, the confidence level that the target A and the target B are a same target is less than or equal to a fifth confidence level threshold.

In a possible implementation, in step 703 in this embodiment of this application, that the first device determines, based on the relationship between the first region and each of the location of the first target and the location of the second target and based on the relationship between the second threshold and the distance between the location of the first target and the location of the second target, that the target confidence level that the first target and the second target are the same target may be determined in the following manner: When the overlapping degree is greater than or equal to the first threshold, both the location of the first target and the location of the second target are in the first region, and the distance between the location of the first target and the location of the second target is less than or equal to the second threshold. In this case, the first device determines that the confidence level that the first target and the second target are the same target is the target confidence level and the target confidence level is greater than or equal to the first confidence level threshold.

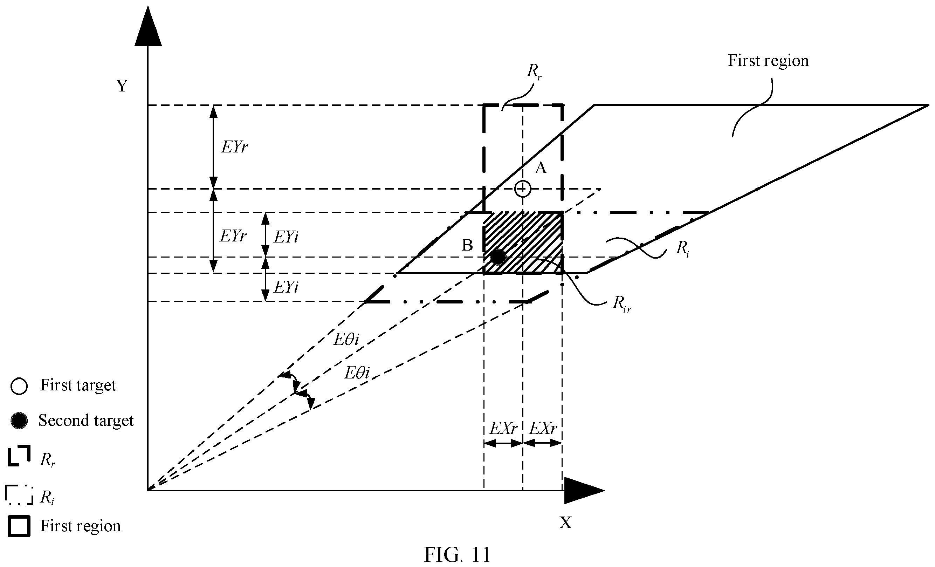

As shown in FIG. 11, a difference between FIG. 11 and FIG. 9a is as follows: In FIG. 11, the location of the target A and the location of the target B are in the overlapping region, and the distance between the location of the target A and the location of the target B is less than or equal to the second threshold. In FIG. 9a, the location of the target A and the location of the target B are in the overlapping region, but the distance between the location of the target A and the location of the target B may not be less than or equal to the second threshold. Therefore, the confidence level that the target A and the target B are a same target in FIG. 11 is greater than the confidence level that the target A and the target B are a same target in FIG. 9a. In addition, an area of the overlapping region in FIG. 11 is greater than an area of the overlapping region in FIG. 9a. Therefore, through comparison between FIG. 11 and FIG. 9a, there is a higher probability that the target A and the target B are a same target in FIG. 11. This also complies with an actual case shown in FIG. 11. The distance between the location of the target A and the location of the target B in FIG. 11 is less than the distance between the location of the target A and the location of the target B in FIG. 9a. In other words, the distance between the location of the target A and the location of the target B in FIG. 11 is shorter than the distance between the location of the target A and the location of the target B in FIG. 9a.

It should be noted that, for example, a target b' is a target b at a location 1, a target b" is the target b at a location 2, and the location 1 and the location 2 are different. In this embodiment of this application, when both a target a and the target b' are in the first region, and a location of the target a and the location of the target b" are also in the first region, if an area of an overlapping region corresponding to the target a and the target b' is greater than an area of an overlapping region corresponding to the target a and the target b", and both an overlapping degree of the overlapping region corresponding to the target a and the target b' and an overlapping degree of the overlapping region corresponding to the target a and the target b" are greater than or equal to the first threshold, a confidence level that the target a and the target b' are a same target is greater than a confidence level that the target a and the target b" are a same target.

It should be noted that, when the area of the overlapping region corresponding to the target a and the target b' is greater than the area of the overlapping region corresponding to the target a and the target b", and both the overlapping degree of the overlapping region corresponding to the target a and the target b' and the overlapping degree of the overlapping region corresponding to the target a and the target b" are greater than or equal to the first threshold, if a distance between the target a and the target b' is greater than a distance between the target a and the target b", the confidence level that the target a and target b" are the same target is greater than the possibility that the target a and the target b' are the same target.

In a possible implementation, when the overlapping degree is greater than or equal to the first threshold, and both the location of the first target and the location of the second target are in the first region and the distance between the location of the first target and the location of the second target is less than or equal to the second threshold, the confidence level that the first target and the second target are the same target is a fifth confidence level. When the overlapping degree is greater than or equal to the first threshold, and at least one of the location of the first target and the location of the second target is outside the first region and/or the distance between the location of the first target and the location of the second target is greater than the second threshold, the confidence level that the first target and the second target are the same target is a sixth confidence level. The fifth confidence level is greater than the sixth confidence level.

In this embodiment of this application, that at least one of the location of the first target and the location of the second target is outside the first region may be replaced with that a maximum of one of the location of the first target and the location of the second target is in the first region. The description includes the following cases: The location of the first target is in the first region, but the location of the second target is outside the first region; or the location of the second target is in the first region, but the location of the first target is outside the first region; or both the location of the first target and the location of the second target are outside the first region.

It may be understood that, when the overlapping degree is greater than or equal to the first threshold, and the location of the first target is in the first region, but the location of the second target is outside the first region and the distance between the location of the first target and the location of the second target is greater than the second threshold, the confidence level that the first target and the second target are the same target is the sixth confidence level. Alternatively, when the overlapping degree is greater than or equal to the first threshold, the location of the first target is in the first region, and the location of the second target is outside the first region, the confidence level that the first target and the second target are the same target is the sixth confidence level. Alternatively, when the overlapping degree is greater than or equal to the first threshold, and the distance between the location of the first target and the location of the second target is greater than the second threshold, the confidence level that the first target and the second target are the same target is the sixth confidence level.

When the overlapping degree is greater than or equal to the first threshold, the location of the first target is in the first region, and the location of the second target is in the first region, the location of the first target is outside the first region, and the distance between the location of the first target and the location of the second target is greater than the second threshold, the confidence level that the first target and the second target are the same target is the sixth confidence. Alternatively, when the overlapping degree is greater than or equal to the first threshold, the location of the first target is in the first region, and the location of the second target is in the first region. In this case, the confidence level that the first target and the second target are the same target is the sixth confidence level.

When the overlapping degree is greater than or equal to the first threshold, and both the location of the first target and the location of the second target are outside the first region and the distance between the location of the first target and the location of the second target is greater than the second threshold, the confidence level that the first target and the second target are the same target is the sixth confidence level. Alternatively, when the overlapping degree is greater than or equal to the first threshold, and both the location of the first target and the location of the second target are outside the first region, the confidence level that the first target and the second target are the same target is the sixth confidence level.

In a possible embodiment, in this embodiment of this application, to further improve a possibility of determining that the first target and the second target are a same target, the first threshold may be determined based on the detection error of the first sensor or the detection error of the second sensor.

In a possible embodiment, the first threshold in this embodiment of this application is determined based on the second detection error, or the first threshold is determined based on the fourth detection error.

In an example, the first threshold increases as the second detection error increases.

In another example, the first threshold increases as the fourth detection error increases.

In a possible implementation, when the second detection error is a first error, the first threshold is a first value, or when the second detection error is a second error, the first threshold is a second value, where the first error is greater than the second error, and the first value is greater than the second value.

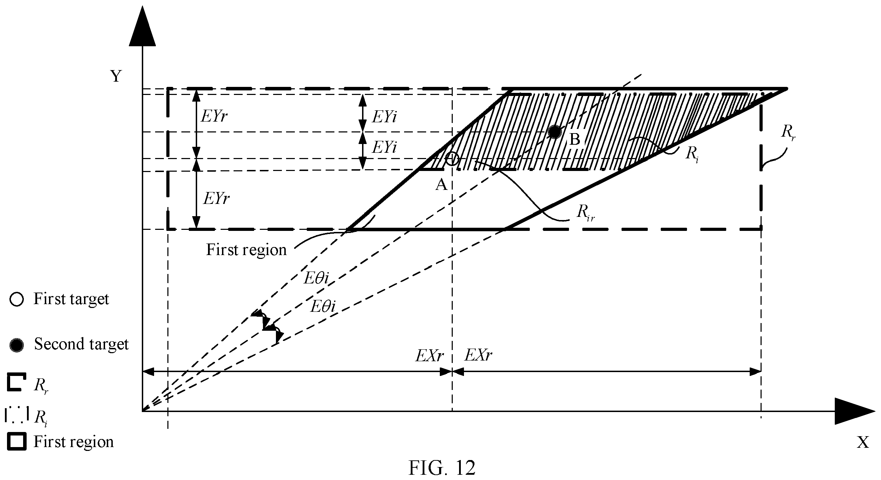

For example, the second detection error is the distance-measuring error of the first sensor in the horizontal direction. Through comparison between FIG. 9a and FIG. 12, the distance-measuring error (*EXr*) of the first sensor in the horizontal direction is the first error in FIG. 12, the distance-measuring (*EXr*) of the first sensor in the horizontal direction is the second error in FIG. 9a, and it is found through comparison that the first error is greater than the second error. It can be found through comparison between FIG. 9a and FIG. 12 that, when the distance-measuring error (*EXr*) of the first sensor in the horizontal direction increases, the overlapping area of the overlapping region between the first target region and the second target region gradually increases (for example, an area of the first target region *Rᵣ* in FIG. 12 is greater than an area of the first target region *Rᵣ* in FIG. 9a). Therefore, if the first threshold is fixed, accuracy of determining, based on a relationship between the overlapping degree of the overlapping region and the first threshold, whether the first target and the second target are a same target may be reduced. Based on this, the first threshold needs to be dynamically adjusted based on the distance-measuring error of the first sensor in the horizontal direction.

As shown in FIG. 12, when the distance-measuring error (*EXr*) of the first sensor in the horizontal direction reaches a specific threshold a, the distance-measuring error (*EXr*) of the first sensor in the horizontal direction covers the entire first region in the horizontal direction. Then, as the distance-measuring error (*EXr*) of the first sensor in the horizontal direction continues to increase, the first target region continues to increase, but a change of the overlapping area of the overlapping region between the first target region and the second target region is not affected. That is, even if the distance-measuring error (*EXr*) of the first sensor in the horizontal direction continues to increase based on the threshold a subsequently, the overlapping area of the overlapping region does not change, that is, the overlapping area is in a "saturated" state. In this case, for a case in FIG. 12, the first threshold may be set as the first value, and for a case in FIG. 9a, the first threshold may be set as the second value, to reduce impact caused by the "saturation".

It may also be understood that the first value is a value set when the overlapping area is in the "saturated" state, and the second value is a value set when the overlapping area is not in the "saturated" state.

It may be understood that in this embodiment of this application, the first device has a plurality of second detection errors and a value corresponding to each of the plurality of second detection errors. In this way, when the second detection error is the first error, the first device may use a value corresponding to the first error as the first threshold. In another possible implementation, when the fourth detection error is a third error, the first threshold is a third value, or when the fourth detection error is a fourth error, the first threshold is a fourth value, where the third error is greater than the fourth error, and the third value is greater than the fourth value.

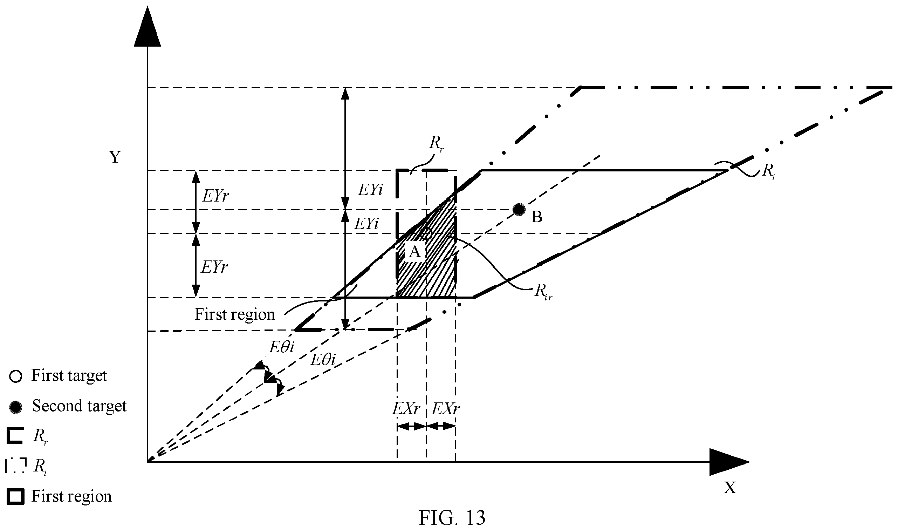

For example, the fourth detection error is the distance-measuring error of the second sensor in the vertical direction. Through comparison between FIG. 9a and FIG. 13, the distance-measuring error (*EYi*) of the second sensor in the vertical direction is the third error in FIG. 13, the distance-measuring error (*EYi*) of the second sensor in the vertical direction is the fourth error in FIG. 9a, and it is found through comparison that the third error is greater than the fourth error. It can be found through comparison between FIG. 9a and FIG. 13 that, when the distance-measuring error (*EYi*) of the second sensor in the vertical direction increases, the overlapping area of the overlapping region between the first target region and the second target region also gradually increases (for example, an area of the second target region *Rᵢ* in FIG. 13 is greater than an area of the second target region *Rᵢ* in FIG. 9a). Therefore, if the first threshold is fixed, accuracy of determining, based on a relationship between the overlapping degree of the overlapping region and the first threshold, whether the first target and the second target are a same target may be reduced. Based on this, the first threshold needs to be dynamically adjusted based on the distance-measuring error (*EYi*) of the second sensor in the vertical direction.

As shown in FIG. 13, when the distance-measuring error (*EYi*) of the second sensor in the vertical direction reaches a specific threshold b, the distance-measuring error (*EYi*) of the second sensor in the vertical direction covers the entire first region in the vertical direction. Then, as the error (*EYi*) of the second sensor in the vertical direction continues to increase, the second target region also continues to increase. Although the second target region continues to increase, the overlapping area of the overlapping region between the first target region and the second target region is not affected, that is, the overlapping area is in a "saturated" state. In this case, for a case in FIG. 13, the first threshold may be set as the third value, and for a case in FIG. 9a, the first threshold may be set as the fourth value, to reduce impact caused by the "saturation".

It may be understood that in this embodiment of this application, the first device has a plurality of fourth detection errors and a value corresponding to each of the plurality of fourth detection errors. In this way, when the fourth detection error is the third error, the first device may use a value corresponding to the third error as the first threshold. For example, in this embodiment of this application, the first device has distance-measuring errors (*EYi*) of a plurality of second sensors in the vertical direction and a value corresponding to the distance-measuring error (*EYi*) of each second sensor in the vertical direction of the distance-measuring errors *(EYi)* of the plurality of second sensors in the vertical direction. In this way, when the distance-measuring error (*EYi*) of the second sensor in the vertical direction is the third error, the first device may use the value corresponding to the third error as the third threshold.

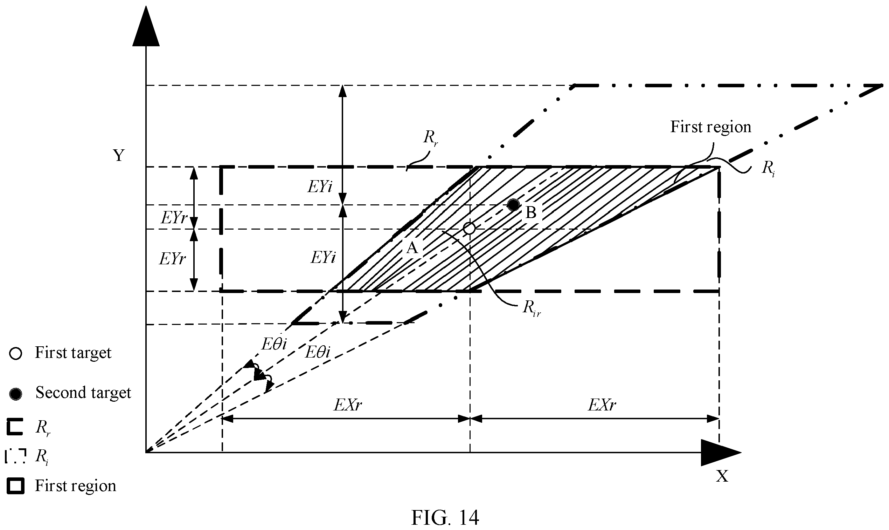

It should be noted that, FIG. 12 is described by using an example in which the distance-measuring error of the first sensor in the horizontal direction increases and FIG. 13 is described by using an example in which the distance-measuring error of the second sensor in the vertical direction increases. When both the distance-measuring error of the first sensor in the horizontal direction and the distance-measuring of the second sensor in the vertical direction increase, the first threshold may also be jointly determined based on both the distance-measuring error of the first sensor in the horizontal direction and the distance-measuring error of the second sensor in the vertical direction. For example, the first threshold changes (for example, increases, as shown in FIG. 14) as the distance-measuring error of the first sensor in the horizontal direction and the distance-measuring error of the second sensor in the vertical direction increase. It can be learned through comparison between FIG. 14 and FIG. 9a that, the distance-measuring error of the first sensor in the horizontal direction in FIG. 14 is greater than the distance-measuring error of the first sensor in the horizontal direction in FIG. 9a, and the distance-measuring error of the second sensor in the vertical direction in FIG. 14 is also greater than the distance-measuring error of the second sensor in the vertical direction in FIG. 9a. Therefore, the first threshold in the case shown in FIG. 14 should be greater than the first threshold corresponding to the case in FIG. 9a. Alternatively, when both the distance-measuring error of the first sensor in the horizontal direction and the distance-measuring error of the second sensor in the vertical direction increase, the first threshold is a, or the first threshold is b, where a is greater than b, a is a parameter that is set when the overlapping region covers the first region, and b is a parameter that is set when the overlapping region does not cover the first region.

Certainly, it may also be understood that the first threshold decreases as the second detection error of the first sensor decreases, and the first threshold decreases as the fourth detection error of the second sensor decreases.

In a possible embodiment, the second threshold in this embodiment of this application is jointly determined based on the second detection error and the fourth detection error. For example, the second threshold decreases as the second detection error and the fourth detection error increase. Alternatively, the second threshold increases as the second detection error and the fourth detection error decrease.

Specifically, the second detection error of the first sensor is a fifth error, the fourth detection error is a sixth error, and the second threshold is a fifth value; or the second detection error of the first sensor is a seventh error, the fourth detection error is an eighth error, and the second threshold is a sixth value, where the fifth value is less than the sixth value, the fifth error is greater than the seventh error, and the sixth error is greater than the eighth error.

For example, as shown in FIG. 14, the second detection error is the distance-measuring error of the first sensor in the horizontal direction, and the fourth detection error is the distance-measuring error of the second sensor in the vertical direction. The distance-measuring error (for example, the fifth error) of the first sensor in the horizontal direction and the distance-measuring error (for example, the sixth error) of the second sensor in the vertical direction are greater than the distance-measuring error (for example, the seventh error) of the first sensor in the horizontal direction and the distance-measuring error (for example, the eighth error) of the second sensor in the vertical direction in FIG. 9a.

In FIG. 14, an overlapping region (a shadow part in FIG. 14) between the first target region and the second target region covers the entire first region. In this case, an overlapping area of the overlapping region reaches a "saturated" state, that is, even if the distance-measuring error of the first sensor in the horizontal direction and the distance-measuring error of the second sensor in the vertical direction continue to increase subsequently, the overlapping area of the overlapping region does not change subsequently. It can be found through comparison between FIG. 14 and FIG. 9a that, the distance between the location of the first target and the location of the second target in FIG. 14 is less than the distance between the location of the first target and the location of the second target in FIG. 9a. Therefore, to reduce incorrect determining, in FIG. 9a, the corresponding second threshold when the distance-measuring error of the first sensor in the horizontal direction is the seventh error and the distance-measuring error of the second sensor in the vertical direction is the eighth error should be greater than the corresponding second threshold when the distance-measuring error of the first sensor in the horizontal direction is the fifth error and the distance-measuring error of the second sensor in the vertical direction is the sixth error, to reduce impact of the "saturation".

In other words, the second threshold is determined based on a relationship between the overlapping region and the first region. Specifically, the second threshold is a seventh value, or the second threshold is an eighth value, where the seventh value is greater than the eighth value, the eighth value is a parameter that is set when the overlapping region covers the first region, and the seventh value is a parameter that is set when the overlapping region does not cover the first region.

It should be noted that, in FIG. 8 to FIG. 14, an example in which the second detection error of the first sensor is the distance-measuring error of the first sensor in the horizontal direction is used.

It may be understood that in this embodiment of this application, the first device may determine the confidence level that the first target and the second target are a same target. For example, the confidence level is 90%, or the confidence level is 80%. Certainly, the first device may determine an indication value indicating that the first target and the second target are a same target or not a same target. For example, the first device outputs a first indicator or a second indicator. The first indicator indicates that the first target and the second target are a same target. The second indicator indicates that the first target and the second target are not a same target.

In a possible implementation, the method provided in this embodiment of this application may further include: The first device determines, based on the target confidence level, whether the first target and the second target are a same target. For example, if the first device determines that the target confidence level is greater than or equal to the first confidence level threshold, the first device determines that the first target and the second target are a same target. If the first device determines that the target confidence level is less than or equal to the second confidence level threshold, the first device determines that the first target and the second target are not a same target.

The foregoing mainly describes the solutions in embodiments of this application from a perspective of the first device. It may be understood that, to implement the foregoing functions, the first device includes a corresponding hardware structure and/or software module for executing various functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, function unit division may be performed on the first device based on the foregoing method examples. For example, each function unit may be obtained through division based on a corresponding function, or two or more functions may be integrated into one processing unit. The integrated unit may be implemented in a form of hardware, or may be implemented in a form of a software function unit. It should be noted that, in embodiments of this application, unit division is an example, and is merely logical function division. During actual implementation, another division manner may be used.

The foregoing describes the methods in embodiments of this application with reference to FIG. 7 to FIG. 14. The following describes a target detection apparatus that is provided in embodiments of this application and that performs the foregoing methods. A person skilled in the art may understand that the method and the apparatus may be mutually combined and referenced, and the target detection apparatus provided in this embodiment of this application may perform the steps performed by the first device in the foregoing target detection method.

Descriptions are provided below by using an example in which function modules are obtained through division based on corresponding functions.

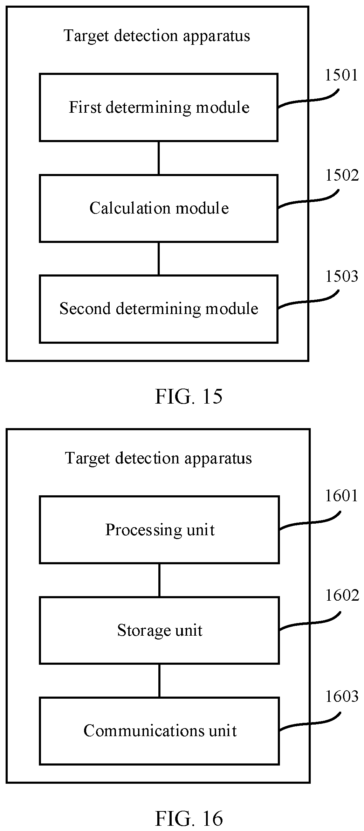

When an integrated unit is used, FIG. 15 shows a target detection apparatus in the foregoing embodiments. The target detection apparatus may include a first determining module 1501, a calculation module 1502, and a second determining module 1503.

In an example, the target detection apparatus is a first device, or is a chip applied to the first device. In this case, the first determining module 1501 is configured to support the target detection apparatus in performing step 701 performed by the first device in the foregoing embodiment. The calculation module 1502 is configured to support the target detection apparatus in performing step 702 performed by the first device in the foregoing embodiment. The second determining module 1503 is configured to support the target detection apparatus in performing step 703 performed by the first device in the foregoing embodiment.

The target detection apparatus may further include a storage module. The storage module is configured to store computer program code. The computer program code includes instructions. If the target detection apparatus is the chip applied to the first device, the storage module may be a storage module (for example, a register or a cache) in the chip, or may be a storage module (for example, a read-only memory or a random access memory) that is in the first device and that is outside the chip.

The first determining module 1501, the calculation module 1502, and the second determining module 1503 may be integrated into a processor or a controller. For example, the processor or the controller may be a central processing unit, a general-purpose processor, a digital signal processor, or an application-specific integrated circuit, a field-programmable gate array or another programmable logic device, a transistor logic device, a hardware component, or any combination thereof. The controller/processor may implement or execute various example logical blocks, modules, and circuits described with reference to content disclosed in the present invention. Alternatively, the processor may be a combination for implementing a computing function, for example, a combination of one or more microprocessors, or a combination of the digital signal processor and a microprocessor.

For example, the target detection apparatus in this application may be the target detection apparatus shown in FIG. 6. In this case, the first determining module 1501, the calculation module 1502, and the second determining module 1503 may be integrated into the processor 41 or the processor 45.

When an integrated unit is used, FIG. 16 is a schematic diagram of a possible logical structure of the target detection apparatus in the foregoing embodiments. The target detection apparatus includes a processing unit 1601. The processing unit 1601 is configured to control and manage an action of the target detection apparatus. For example, the processing unit 1601 is configured to perform a step of performing information/data processing in the target detection apparatus.

In a possible embodiment, the target detection apparatus may further include a storage unit 1602, configured to store program code and data that can be used by the target detection apparatus. In a possible embodiment, when the target detection apparatus is a server, the target detection apparatus may further include a communications unit 1603. The communications unit 1603 is configured to support the target detection apparatus in performing a step of sending or receiving information/data.

For example, the target detection apparatus is a first device, or is a chip applied to the first device. In this case, the processing unit 1601 is configured to support the target detection apparatus in performing step 701 to step 703 performed by the first device in the foregoing embodiment.

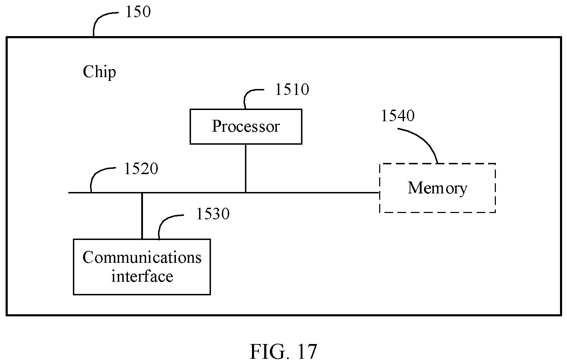

FIG. 17 is a schematic diagram of a structure of a chip 150 according to an embodiment of this application. The chip 150 includes one or more (including two) processors 1510 and a communications interface 1530.

Optionally, the chip 150 further includes a memory 1540. The memory 1540 may include a read-only memory and a random access memory, and provide operation instructions and data for the processor 1510. A part of the memory 1540 may further include a nonvolatile random access memory (nonvolatile random access memory, NVRAM).

In some implementations, the memory 1540 stores the following elements: an executable module or a data structure, a subset thereof, or an extended set thereof.

In this embodiment of this application, the operation instructions stored in the memory 1540 (where the operation instructions may be stored in an operating system) are invoked to perform a corresponding operation.

In a possible implementation, first devices use a similar structure, and different apparatuses may use different chips to implement respective functions.

The processor 1510 controls an operation of the first device, and the processor 1510 may also be referred to as a central processing unit (central processing unit, CPU).

The memory 1540 may include a read-only memory and a random access memory, and provide instructions and data for the processor 1510. A part of the memory 1540 may further include a nonvolatile random access memory (nonvolatile random access memory, NVRAM). For example, during application, the memory 1540, the communications interface 1530, and the memory 1540 are coupled together by using a bus system 1520. The bus system 1520 may further include a power bus, a control bus, a status signal bus, and the like in addition to a data bus. However, for clear description, various types of buses in FIG. 17 are marked as the bus system 1520.

The methods disclosed in the foregoing embodiments of this application may be applied to the processor 1510, or may be implemented by the processor 1510. The processor 1510 may be an integrated circuit chip, and has a signal processing capability. In an implementation process, the steps in the foregoing methods may be implemented by using a hardware integrated logical circuit in the processor 1510, or by using instructions in a form of software. The processor 1510 may be a general-purpose processor, a digital signal processor (digital signal processor, DSP), an application-specific integrated circuit (application specific integrated circuit, ASIC), a field-programmable gate array (field-programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1540, and the processor 1510 reads information in the memory 1540 and completes the steps in the foregoing methods in combination with hardware of the processor 1510.

In a possible implementation, the processor 1510 is configured to perform the processing steps performed by the first device in the embodiment shown in FIG. 7.

The foregoing communications unit may be an interface circuit or a communications interface of the apparatus, and is configured to receive a signal from another apparatus. For example, when the apparatus is implemented as a chip, the communications unit is an interface circuit or a communications interface that is of the chip and that is configured to receive a signal from another chip or apparatus or send a signal.

In embodiments, the instructions that are stored in the memory and that are to be executed by the processor may be implemented in a form of a computer program product. The computer program product may be written into the memory in advance, or may be downloaded and installed in the memory in a form of software.

The computer program product includes one or more computer instructions. When the computer program instructions are loaded and executed on a computer, all or some of the procedures or functions according to embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive solid-state drive, SSD), or the like.

According to one aspect, a computer-readable storage medium is provided. The computer-readable storage medium stores instructions, and when the instructions are run, a first device or a chip applied to the first device is enabled to perform step 701, step 702, and step 703 in the embodiment.

The readable storage medium may include any medium that can store program code, such as a USB flash drive, a removable hard disk, a read-only memory, a random access memory, a magnetic disk, or an optical disc.

According to one aspect, a computer program product including instructions is provided. The computer program product stores the instructions, and when the instructions are run, a first device or a chip applied to the first device is enabled to perform step 701, step 702, and step 703 in the embodiment.

According to one aspect, a chip is provided. The chip is applied to a first device, the chip includes at least one processor and a communications interface, the communications interface is coupled to the at least one processor, and the processor is configured to run instructions, to perform step 701, step 702, and step 703 in the embodiment.

All or some of embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD for short)), or the like.

Although this application is described with reference to embodiments herein, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a good effect.

Although this application is described with reference to specific features and embodiments thereof, it is clear that various modifications and combinations may be made to them without departing from the spirit and scope of this application. Correspondingly, this specification and the accompanying drawings are merely example descriptions of this application defined by the appended claims, and are considered as any of or all modifications, variations, combinations or equivalents that cover the scope of this application. It is clearly that a person skilled in the art can make various modifications and variations to this application without departing from the spirit and scope of this application. In this way, this application is intended to cover these modifications and variations of this application provided that they fall within the scope of the claims of this application and their equivalent technologies.

## Claims

1. A target detection method, comprising:
determining an overlapping region between a first target region and a second target region, wherein the first target region is determined based on a detection error of a first sensor and a location of a first target detected by the first sensor, the second target region is determined based on a detection error of a second sensor and a location of a second target detected by the second sensor, the first target region comprises the location of the first target, and the second target region comprises the location of the second target;
calculating an overlapping degree of the overlapping region in a union set of the first target region and the second target region; and
when the overlapping degree is greater than or equal to a first threshold, determining, based on a relationship between a first region and each of the location of the first target and the location of the second target and/or based on a relationship between a second threshold and a distance between the location of the first target and the location of the second target, that a confidence level that the first target and the second target are a same target is a target confidence level, wherein
the first region is determined based on a first detection error of the first sensor and a third detection error of the second sensor; the detection error of the first sensor comprises the first detection error and a second detection error, and precision of the first detection error is higher than precision of the second detection error; and the detection error of the second sensor comprises the third detection error and a fourth detection error, and precision of the third detection error is higher than precision of the fourth detection error.

2. The method according to claim 1, wherein the relationship between the first region and each of the location of the first target and the location of the second target comprises:
both the location of the first target and the location of the second target are in the first region.

3. The method according to claim 1, wherein the relationship between the second threshold and the distance between the location of the first target and the location of the second target comprises:
the distance between the location of the first target and the location of the second target is less than or equal to the second threshold.

4. The method according to any one of claims 1 to 3, wherein the determining, based on a relationship between a first region and each of the location of the first target and the location of the second target and/or based on a relationship between a second threshold and a distance between the location of the first target and the location of the second target, that a confidence level that the first target and the second target are a same target is a target confidence level comprises:
when both the first target and the second target are in the first region and/or the distance between the first target and the second target is less than or equal to the second threshold, determining that the confidence level that the first target and the second target are the same target is the target confidence level, wherein the target confidence level is greater than or equal to a first confidence level threshold.

5. The method according to any one of claims 1 to 4, wherein
the first threshold is determined based on the second detection error, or the first threshold is determined based on the fourth detection error.

6. The method according to claim 5, wherein the first threshold increases as the second detection error increases, or the first threshold increases as the fourth detection error increases.

7. The method according to any one of claims 1 to 6, wherein
the second threshold is determined based on the second detection error and the fourth detection error.

8. The method according to claim 7, wherein the second threshold decreases as the second detection error and the fourth detection error increase.

9. The method according to any one of claims 1 to 8, wherein the first sensor is a radar, and the second sensor is a camera.

10. The method according to any one of claims 1 to 9, wherein the first detection error is a distance-measuring error of the first sensor in a vertical direction, and the second detection error is an angle-measuring error of the first sensor or a distance-measuring error of the first sensor in a horizontal direction; and
the third detection error is an angle-measuring error of the second sensor, and the fourth detection error is a distance-measuring error of the second sensor.

11. The method according to any one of claims 1 to 10, wherein the location of the first target is a location of the first target relative to a reference point on an XY plane, wherein an X-axis direction of the XY plane is a vehicle widthwise direction, and a Y-axis direction of the XY plane is a vehicle lengthwise direction; and the location of the second target is a location of the second target relative to the reference point on the XY plane.

12. A target detection apparatus, comprising:
a first determining module, configured to determine an overlapping region between a first target region and a second target region, wherein the first target region is determined based on a detection error of a first sensor and a location of a first target detected by the first sensor, the second target region is determined based on a detection error of a second sensor and a location of a second target detected by the second sensor, the first target region comprises the location of the first target, and the second target region comprises the location of the second target;
a calculation module, configured to calculate an overlapping degree of the overlapping region in a union set of the first target region and the second target region; and
a second determining module, configured to: when the overlapping degree is greater than or equal to a first threshold, determine, based on a relationship between a first region and each of the location of the first target and the location of the second target and/or based on a relationship between a second threshold and a distance between the location of the first target and the location of the second target, that a confidence level that the first target and the second target are a same target is a target confidence level, wherein
the first region is determined based on a first detection error of the first sensor and a third detection error of the second sensor; the detection error of the first sensor comprises the first detection error and a second detection error, and precision of the first detection error is higher than precision of the second detection error; and the detection error of the second sensor comprises the third detection error and a fourth detection error, and precision of the third detection error is higher than precision of the fourth detection error.

13. The apparatus according to claim 12, wherein the relationship between the first region and each of the location of the first target and the location of the second target comprises:
both the location of the first target and the location of the second target are in the first region.

14. The apparatus according to claim 12, wherein the relationship between the second threshold and the distance between the location of the first target and the location of the second target comprises:
the distance between the location of the first target and the location of the second target is less than or equal to the second threshold.

15. The apparatus according to any one of claims 12 to 14, wherein
when both the first target and the second target are in the first region and/or the distance between the first target and the second target is less than or equal to the second threshold, the second determining module is configured to determine that the confidence level is the target confidence level, wherein the target confidence level is greater than or equal to a first confidence level threshold.

16. The apparatus according to any one of claims 12 to 15, wherein
the first threshold is determined based on the second detection error, or the first threshold is determined based on the fourth detection error.

17. The apparatus according to claim 16, wherein the first threshold increases as the second detection error increases, or the first threshold increases as the fourth detection error increases.

18. The apparatus according to any one of claims 12 to 17, wherein
the second threshold is determined based on the second detection error and the fourth detection error.

19. The apparatus according to claim 18, wherein the second threshold decreases as the second detection error and the fourth detection error increase.

20. The apparatus according to any one of claims 12 to 19, wherein the first sensor is a radar, and the second sensor is a camera.

21. The apparatus according to any one of claims 12 to 20, wherein the first detection error is a distance-measuring error of the first sensor in a vertical direction, and the second detection error is an angle-measuring error of the first sensor or a distance-measuring error of the first sensor in a horizontal direction; and
the third detection error is an angle-measuring error of the second sensor, and the fourth detection error is a distance-measuring error of the second sensor.

22. The apparatus according to any one of claims 12 to 21, wherein the location of the first target is a location of the first target relative to a reference point on an XY plane, wherein an X-axis direction of the XY plane is a vehicle widthwise direction, and a Y-axis direction of the XY plane is a vehicle lengthwise direction; and the location of the second target is a location of the second target relative to the reference point on the XY plane.

23. A computer-readable storage medium, wherein the computer-readable storage medium stores instructions, and when the instructions are run, the target detection method according to any one of claims 1 to 11 is implemented.

24. A chip, wherein the chip comprises at least one processor and a communications interface, wherein the communications interface is coupled to the at least one processor, the at least one processor is configured to run a computer program or instructions, to implement the target detection method according to any one of claims 1 to 11, and the communications interface is configured to communicate with another module other than the chip.

25. A target detection apparatus, comprising at least one processor, wherein the at least one processor is coupled to a memory, the memory stores a computer program or instructions, and the at least one processor is configured to run the computer program or the instructions stored in the memory, to implement the target detection method according to any one of claims 1 to 11.
